# EUROPEAN PATENT SPECIFICATION

(11) **EP 4 519 354 B1**
(45) Date of publication and mention of the grant of the patent: **01.04.2026**
(21) Application number: 23727409.7
(22) Date of filing: 04.05.2023
(51) Int. Cl.: C08L 15/00, C08L 9/06, C08L 9/00, B60C 1/00

(54) **ELASTOMERIC COMPOUND FOR TREAD BAND OF A TYRE AND RELATIVE TYRE**
ELASTOMERMISCHUNG FÜR LAUFSTREIFEN EINES REIFENS UND REIFEN
COMPOSÉ ÉLASTOMÈRE POUR BANDE DE ROULEMENT D'UN PNEU ET PNEU ASSOCIÉ

(30) Priority: 04.05.2022 IT 202200009095
(43) Date of publication of application: 12.03.2025
(73) Proprietor: Pirelli Tyre S.p.A., 20126 Milano (IT)
(72) Inventor: ZINNA, Marianna, 20126 Milano (IT); NAPOLITANO, Luca, 20126 Milano (IT)
(74) Representative: PGA S.p.A.
(86) International application number: PCT/IB2023/054633
(87) International publication number: WO 2023/214342

(56) References cited:
- US-A1- 2017 107 360
- US-A1- 2018 362 740
- US-B2- 10 654 316
- US-B2- 8 865 814

## Description

### FIELD OF THE INVENTION

The present invention relates to an elastomeric compound for tyres for vehicle wheels, in particular an elastomeric compound for tread band of a tyre.

### BACKGROUND ART

Typically the elastomeric compounds used in the manufacture of the tread band of tyres for vehicle wheels comprise mixtures of polybutadiene rubbers (BR) and styrene butadiene rubbers (SBR) together with plasticisers such as process oils and resins.

Polybutadiene rubbers (BR), especially polybutadiene rubbers (BR) with a high content of cis double bonds such as for example EUROPRENE^{®} NEOCIS BR 60 from Versalis, are appreciated for their mechanical properties of high resistance to abrasion.

Solution-polymerised styrene butadiene SBR rubbers (S-SBR), such as TUFDENE E680 from Ashai, are commonly used to improve handling performance especially in wet conditions, while emulsion-polymerised SBR rubbers (E-SBR), such as SBR 1739 from Synthos, having a weight average molecular weight Mw higher than that of standard solution-polymerised styrene butadiene rubbers (S-SBR), due to their high tear strength.

To give the tyre high resistance to tearing and abrasion and therefore a long road life, blends of styrene-butadiene copolymer in emulsion (E-SBR) and polybutadiene (BR) may be used in the tread band compounds, preferably with a high cis content, but at the expense of wet road performance. On the other hand, by replacing the emulsion styrene butadiene rubber (E-SBR) and part of the polybutadiene rubber (BR) with a conventional solution-polymerised styrene butadiene rubber (S-SBR), such as for example Tufdene E680 or Tufdene 3830 from Asahi, to improve handling in wet condition, a decrease in the mechanical resistance performances is observed, performances which are instead important in general and fundamental in certain demanding applications such as for example in the driving of motorcycles of the enduro type.

In other words, on the basis of the current knowledge of the sector, it seems very difficult to reconcile by means of the use of the aforesaid polymers the opposing requirements of long distances and driving on the wet and, in practice, one has to settle for the best compromise.

Document US20180362740A1 describes in par. 0060 an elastomeric composition comprising a butadiene rubber (BR150B from Ube Ind.), an emulsion-polymerised styrene-butadiene rubber (E-SBR SBR1723 from JSR Corp.) and a non-functionalised solution-polymerised styrene-butadiene rubber (S-SBR Tufdene 3830 from Asahi Kasei Corp.).

### SUMMARY OF THE INVENTION

The Applicant has posed the problem of how to further improve the road performance, especially in the wet, of current tyres without however losing in tear and resistance and, therefore, in mileage.

In this regard, the Applicant has conducted several studies and has found that it is possible to obtain this difficult result by modifying the conventional tread band compounds by partially replacing the high cis polybutadiene (BR) and the emulsion-polymerised solid styrene-butadiene copolymer (E-SBR) with a particular type of solution-polymerised solid styrene butadiene copolymer (S-SBR) functionalised with very high molecular weight multi-branch agents of new-generation. This class of solution-polymerised solid styrene butadiene copolymers (S-SBR) functionalised with high molecular weight multi-branch agents when introduced into elastomeric tread compositions in precise amounts, impart a high mechanical strength to the elastomeric compound, comparable to that of a typical mixture of emulsion-polymerised solid styrene-butadiene copolymer and polybutadiene (E-SBR/BR) for tread band and at the same time, unexpectedly considering the high molecular weight of the polymer and the consequent predictable increase in stiffness of the compound, good wet performance.

Furthermore, in a preferred embodiment, the Applicant has succeeded not only in maintaining the mechanical strength properties but also in improving the wet performance of the material. This additional advantage was obtained by further increasing the molecular weight of the polymeric matrix, i.e. by partially replacing the conventional oil/resin plasticising mixture with a mixture of liquid polymers.

A first aspect of the present invention is therefore an elastomeric composition for a vehicle wheel tyre comprising
0 to 30 phr of at least one liquid polymer,
0 to 20 phr of at least one resin,
10 to 60 phr of at least one plasticising oil,
wherein the sum of the liquid polymer, the resin, if present, and the plasticising oil is 20 to 90 phr,
100 phr of a mixture of solid diene elastomeric polymers, wherein said polymers mixture comprises, preferably consists of:
10 to 50 phr of at least one solid polybutadiene (BR) having
   a weight average molecular weight Mw between 300,000 g/mol and 600,000 g/mol and
   a cis double bond content of at least 95%,
10 to 70 phr of at least one emulsion-polymerised solid styrene butadiene copolymer (E-SBR) having
   a Tg of -60 °C to -20 °C,
   a Mooney viscosity at 160 °C comprised between 30 and 70 MU, and
   an amount of styrene comprised between 15% and 50%, and
10 to 80 phr of at least one solution-polymerised solid styrene butadiene copolymer (S-SBR), chain-functionalised with multi-branch coupling agents, having:
   a weight average molecular weight Mw greater than 500,000 g/mol, and/or
   an amount of styrene comprised between 25% and 50% and an amount of vinyl comprised between 10% and 50%, and/or
   a Tg between -50 °C and -20 °C, and/or
   a Mooney viscosity at 160 °C between 60 and 100 MU,
wherein the characteristics of the solid diene elastomeric polymers of said mixture are measured according to the methods indicated in the experimental part,
at least 40 phr of at least one reinforcing filler, and
at least 1.0 phr, preferably at least 2 phr, of at least one vulcanising agent.

A further aspect of the present invention is an elastomeric compound for tread band of a tyre obtained by mixing and vulcanising the elastomeric composition according to the invention.

A further aspect of the present invention is a tyre tread band for vehicle wheels comprising the elastomeric compound according to the invention.

A further aspect of the present invention is a tyre for vehicle wheels comprising the tyre tread band according to the invention.

### DEFINITIONS

The term "phr" (parts per hundreds of rubber) means the parts by weight of a given component of the vulcanisable elastomeric composition by 100 parts by weight of the mixture of solid diene elastomeric polymers.

The term "elastomeric composition" means a composition, comprising at least one diene elastomeric polymer and one or more additives, which by mixing provides an elastomeric compound suitable for use in tyre components.

The components of the elastomeric composition are not generally all introduced simultaneously into the mixer but typically added in sequence. In particular, the vulcanisation additives, such as the vulcanising agent and possibly the accelerant and retardant agents, are usually added in a downstream step with respect to the incorporation and processing of all the other components.

In the intermediate or final elastomeric compound, the individual components of the elastomeric composition do not always remain unchanged or are individually traceable as they may have been transformed, completely or in part, due to the interaction with other components, of heat and/or mechanical processing. The term "elastomeric composition" herein is meant to include the set of all the components that are added in the preparation of the elastomeric compound, regardless of whether they are all actually present simultaneously, are introduced sequentially or are then traceable in the elastomeric compound or in the final tyre.

The term "elastomeric compound" indicates the compound obtainable by mixing and possibly heating at least one diene polymer with at least one of the additives commonly used in the preparation of tyre compounds.

The term "vulcanised elastomeric compound" means the material obtainable by cross-linking or sulphur vulcanisation of an elastomeric compound.

The term "diene polymer" indicates a polymer or copolymer derived from the polymerisation of one or more monomers, of which at least one is a conjugated diene (conjugated diolefin).

The term "solid diene elastomeric polymer" indicates a natural or synthetic polymer which, after vulcanisation, may be stretched repeatedly at room temperature to at least twice its original length and after removal of the tensile load substantially immediately returns with force to approximately its original length (according to the definitions of the ASTM D1566-11 Standard terminology relating to Rubber).

The term "vulcanisation" refers to the cross-linking reaction in a natural or synthetic rubber induced, for example, by a sulphur-based vulcanising agent.

The term "green" indicates a material, a compound, a composition, a component or a tyre not yet vulcanised.

The term "vulcanising agent" indicates a cross-linking agent capable of transforming natural or synthetic rubber into elastic and resistant material due to the formation of a three-dimensional network of inter- and intra-molecular bonds.

The term "vulcanisation accelerant" means a compound capable of decreasing the duration of the vulcanisation process and/or the operating temperature, such as TBBS, sulphenamides in general, thiazoles, dithiophosphates, dithiocarbamates, guanidines, as well as sulphur donors such as thiurams.

The term "vulcanisation activating agent" indicates a product capable of further facilitating the vulcanisation, making it happen in shorter times and possibly at lower temperatures. An example of activating agent is the stearic acid-zinc oxide system.

The term "vulcanisation retardant" means a product capable of delaying the onset of the vulcanisation reaction and/or suppressing undesired secondary reactions, for example N-(cyclohexylthio)phthalimide (CTP).

The term "reinforcing filler" is meant to refer to a reinforcing material typically used in the sector to improve the mechanical properties of tyre rubbers, preferably selected from among carbon black, conventional silica, such as silica from sand precipitated with strong acids, preferably amorphous, diatomaceous earth, calcium carbonate, titanium dioxide, talc, alumina, aluminosilicates, kaolin, silicate fibres and mixtures thereof.

The term "white filler" is meant to refer to a conventional reinforcing material used in the sector selected from among conventional silica and silicates, such as sepiolite, paligorskite also known as attapulgite, montmorillonite, alloisite and the like, possibly modified by acid treatment and/or derivatised. Typically, white fillers have surface hydroxyl groups.

The term "mixing step (1)" indicates the step of the preparation process of the elastomeric compound in which one or more additives may be incorporated by mixing and possibly heating, except for the vulcanisation agent, which is fed in step (2). The mixing step (1) is also referred to as "non-productive step". In the preparation of a compound there may be several "non-productive" mixing steps, which may be indicated with 1a, 1b, etc.

The term "mixing step (2)" indicates the next step of the preparation process of the elastomeric compound in which the vulcanisation agent and, possibly, the other additives of the vulcanisation package are introduced into the elastomeric compound obtained from step (1), and mixed in the material, at controlled temperature, generally at a compound temperature lower than 120 °C, so as to provide the vulcanisable elastomeric compound. The mixing step (2) is also referred to as "productive step". Each mixing step may comprise several intermediate processing steps or sub-steps, characterised by the momentary interruption of the mixing to allow the addition of one or more ingredients but without intermediate discharge of the compound.

### DETAILED DESCRIPTION OF THE INVENTION

The elastomeric composition according to the invention is characterised by one or more of the following preferred aspects taken alone or in combination with one another.

The present composition may comprise for each class or category of ingredients at least one or two or more of them in a mixture, for example two or more liquid polymers, the total amount of which complies with the amount preferences specified herein.

The elastomeric composition according to the invention may comprise at least one liquid polymer.

The liquid polymer may be present in an amount preferably between 0 and 28 phr, more preferably between 0 and 23 phr.

The liquid polymer may be present in an amount greater than 3 phr, preferably than 4 phr and/or less than 25 phr, preferably than 20 phr.

The present composition may comprise at least one liquid polymer preferably selected from a liquid polybutadiene, a liquid styrene butadiene copolymer, a liquid polyisoprene and mixtures thereof.

The term "liquid polymer" means a diene polymer derived from the polymerisation of one or more monomers, among which at least one is a conjugated diene, said polymer being a pourable liquid or a low viscosity fluid at a temperature of 23 °C.

Preferably, the liquid polymer is characterised by one or more of the following parameters:
a weight average molecular weight (Mw) not higher than 80,000 g/mol, and/or
a glass transition temperature (Tg) lower than 0 °C.

The weight average molecular weight (Mw) may be measured according to known techniques in the field such as for example by GPC (Gel Permeation Chromatography) according to the ISO 13885 method.

The glass transition temperature Tg can be conveniently measured by using a differential scanning calorimeter (DSC) according to methods well known to those skilled in the art (ISO 22768 "Rubber, Raw - Determination of the glass transition temperatures by differential scanning calorimetry (DSC)".

Preferably, the liquid polymer is characterised by a (Mw) of between 500 and 80,000 g/mol, more preferably between 500 and 50,000 g/mol.

Preferably, the liquid polymer is characterised by a glass transition temperature (Tg) of between -120 °C and 0 °C, more preferably between -110 °C and -40 °C.

The at least one liquid polymer may be a liquid polybutadiene.

Preferably, the liquid polybutadiene is characterised by weight average molecular weight of between 500 and 30,000 g/mol, preferably between 8,000 and 20,000 g/mol, between 10,000 and 15,000 g/mol.

Preferably, the liquid polybutadiene is characterised by a glass transition temperature (Tg) of between -120 °C and -50 °C, more preferably between -110 °C and -90 °C.

Preferably, the liquid polybutadiene has a vinyl content of between 0 and 90%, preferably between 1 and 50%.

Possibly, the liquid polybutadiene may be modified with maleic anhydride, esterified or acid carboxylic groups, epoxy groups or hydroxyl groups or trialkoxy-silyl groups.

Examples of suitable liquid polybutadienes are the liquid polymers based on butadiene marketed by Evonik under the trade name POLYVEST 110, POLYVEST 130, POLYVEST MA 75; marketed by Kuraray under the trade name LBR 307, LBR 305, LBR 300; and marketed by Cray Valley under the trade name RICON 130, RICON 130 MA8, RICON 130 MA 13, RICON 150, RICON 156, RICON 157.

The at least one liquid polymer may be a liquid styrene butadiene copolymer.

Preferably, the liquid styrene butadiene copolymer is characterised by a weight average molecular weight of between 500 and 10,000 g/mol, preferably between 2,000 g/mol and 6,000 g/mol

Preferably, the liquid styrene butadiene copolymer is characterised by a glass transition temperature (Tg) of between -90 °C and -20 °C, more preferably between -70 °C and -50 °C.

Preferably, the liquid styrene butadiene copolymer has a vinyl content between 0 and 90%, preferably between 1 and 50%.

Possibly, the liquid styrene butadiene copolymer may be modified with maleic anhydride, esterified or acid carboxylic groups, epoxy groups or hydroxyl groups or trialkoxy-silyl groups.

Examples of suitable liquid styrene-butadiene copolymer are the styrene-butadiene-based liquid polymers marketed by Cray Valley (Total) under the trade name RICON^{®} 100, RICON^{®} 181. RICON^{®} 184, and by Kuraray as LSBR820. LSBR841.

The at least one liquid polymer may be a liquid polyisoprene.

Preferably, the liquid polyisoprene has a weight average molecular weight of between 3,000 and 80,000 g/mol, preferably between 20,000 and 60,000 g/mol.

Preferably, the liquid polyisoprene has a glass transition temperature (Tg) comprised between -80 °C and -30 °C, preferably between -70 °C and -40 °C.

Possibly, the liquid polyisoprene may be modified with maleic anhydride, esterified or acid carboxylic groups, epoxy groups, hydroxyl groups or trialkoxy-silyl groups.

Examples of suitable liquid polyisoprene A are liquid polymers based on isoprene (IR) marketed by Kuraray under the trade name LIR 30, LIR 50, LIR 403, LIR 410; among natural polyisoprenes: DPR 35, DPR 40, DPR75, DPR 400 of DPR INDUSTRIES.

Preferably, the at least one liquid polymer is a liquid polybutadiene and/or a liquid styrene butadiene copolymer.

The elastomeric composition according to the invention may comprise at least one resin.

The resin may be present in an amount preferably between 0 and 15 phr, more preferably between 3 and 10 phr.

The resin may be present in an amount greater than 2 phr, preferably than 4 phr and/or less than 17 phr, preferably than 11 phr.

The term "resin" is used to mean a polymer having thermoplastic or at least partially thermoplastic characteristics (as in the case of elastomeric/thermoplastic block copolymers).

Thermoplastic characteristics is used to indicate the tendency of the polymer to increase its viscosity, that is, to deform plastically when subjected to a temperature increase and/or to a sufficiently strong deformation. These characteristics of thermoplasticity differentiate the behaviour of a resin from that of an elastomer, as defined hereinafter. Furthermore, a resin does not derive from the polymerisation of conjugated dienes, unlike the liquid polymer and diene elastomeric polymers as defined herein.

The resin of the present composition is a non-cross-linkable polymer (non-reactive resin).

Preferably, the resin is characterised by one or more of the following parameters:
- a weight average molecular weight (Mw) of between 200 and 3,000 g/mol, and/or
- a glass transition temperature (Tg) higher than 0 °C.

The weight average molecular weight (Mw) may be measured according to known techniques in the field such as, for example, by SEC (Size-Exclusion Chromatography) according to the ASTM D6579-11 method "Standard Practice for Molecular Weight Averages and Molecular Weight Distribution of Hydrocarbon, Rosin and Terpene Resins by Size-Exclusion Chromatography".

The glass transition temperature (Tg) and the softening temperature (Tm) can conveniently be measured using a differential scanning calorimeter (DSC) according to methods well known to the man skilled in the art, such as the ASTM D-6604 method (Glass Transition Temperatures of Hydrocarbon resins by Differential Scanning Calorimetry).

More preferably, the resin is characterised by a weight average molecular weight (Mw) of between 500 and 3,000 g/mol, more preferably of between 500 and 2,000 g/mol.

More preferably, the resin is characterised by a glass transition temperature (Tg) higher than 20 °C.

The resin may be solid with a softening temperature (Tm) higher than 0 °C, more preferably a softening temperature comprised of between 10 and 160 °C or between 60 °C and 90 °C.

The resin used in the composition is preferably selected from the group comprising hydrocarbon resins, phenolic resins, natural resins and mixtures thereof.

Preferably, the resin is a hydrocarbon resin.

Preferably, the resin is a mixture of a natural resin and a hydrocarbon resin.

The hydrocarbon resin may be aliphatic, aromatic or combinations thereof, meaning that the base polymer of the resin may consist of aliphatic and/or aromatic monomers.

The hydrocarbon resin may be natural (e.g. vegetable) or synthetic or derived from petroleum. In some cases, non-limiting for the invention, these resins essentially contain only hydrogen and carbon atoms.

Preferably, the hydrocarbon resin has a weight average molecular weight of between 500 and 3,000 g/mol, preferably between 700 and 1500 g/mol.

Preferably, the hydrocarbon resin is selected from homo- or copolymers of cyclopentadiene (CPD), dicyclopentadiene (DCPD), homo- or copolymers of terpene, homo- or copolymers of the C5 fraction and mixtures thereof, preferably DCPD/vinyl aromatic copolymers, DCPD/terpene copolymers, DCPD/C5 fraction copolymers, terpene/vinyl aromatic copolymers, C5 fractions/vinyl aromatic copolymers and combinations thereof.

Examples of vinyl aromatic monomers include styrene, alpha-methylstyrene, ortho-, meta-, para-methylstyrene, vinyl-toluene, para-terbutylstyrene, methoxy-styrenes, chloro-styrenes, vinyl-mesitylene, divinyl-benzenes, vinyl-naphthalenes, vinyl aromatic monomers derived from the C8-C10 fraction, in particular from C9.

Preferably, the hydrocarbon resin is selected from resins derived from coumarone-indene, styrene-indene, styrene-alkylstyrene, and aliphatic resins.

Specific examples of commercially available hydrocarbon resins are NOVARES C resins, manufactured by RUETGERS CHEMICAL GmbH (indene-coumarone synthetic resins) NOVARES C10, C30 and C90 being particularly preferred.

Examples of commercially available styrene-indene hydrocarbon resins are UNILENE A 100, manufactured by Braskem, and Novares TL 90, manufactured by Ruetgers.

Examples of commercially available alkyl-styrene hydrocarbon resins are: Sylvares SA 85, manufactured by Arzona Chemical, Kristalex F 85, manufactured by Eastman.

Examples of commercially available aliphatic hydrocarbon resins are: Escorez^{®} 1102 (manufactured by ExxonMobil), Piccotac 1100 (manufactured by Eastman), Quintone A 100 (manufactured by Zeon Chemicals).

Alternatively, the resin is a phenolic resin.

Preferably, the phenolic resin is selected from among alkylphenol-formaldehyde based resins, rosin-modified alkylphenolic resins, alkylphenol-acetylene based resins, alkylphenol modified resins and terpene-phenol based resins.

Examples of commercially available phenolic resins that can be used in the present invention are: RESINA SP-1068 (manufactured by SI GROUP Inc.) (octylphenol-formaldehyde resin); DUREZ 32333 (manufactured by Sumitomo Bakelite) (phenol-formaldehyde resin); KORESIN (manufactured by BASF Company) (pt-butylphenol-acetylene resin); SYLVARES TP 115 (manufactured by Arizona Chemicals) (terpen-phenolic resin).

Alternatively, the resin is a natural terpene-based resin.

Preferably, the resin is a polyterpene resin selected from the homo- or copolymers of alpha-pinene, beta-pinene, limonene, and vinyl aromatic monomers (styrene) and/or aromatic monomers (phenol).

Preferably, the resin is a polyterpene resin having a glass transition temperature (Tg) higher than 25 °C.

Preferably, the resin is a polyterpene resin having a softening temperature (Tm) of between 50 °C and 150 °C.

Preferably, the resin is a polyterpene resin having a weight average molecular weight of between 500 and 3,000 g/mol.

Examples of commercially available natural terpene-based resins that can be used in the present invention are: Piccolyte F90 and Piccolyte F105, manufactured by PINOVA; Dercolyte A 115 and Dercolyte M 115, manufactured by DRT.

Alternatively, the resin is a rosin-based natural resin.

The term rosin commonly indicates mixtures of isomer organic acids (rosin acids), characterised by a common structure, comprising three C6 fused rings, double bonds in different number and positions and a single carboxylic group.

Examples of rosin-based resins are marketed by DRT under the trade name HYDROGRAL G and DERTOLINE P 105.

The elastomeric composition according to the present invention comprises at least one plasticising oil.

Preferably, the composition comprises at least 10 phr or at least 15 phr or at least 20 phr and/or no more than 60 phr or 50 phr or 40 phr of at least one plasticising oil.

Preferably, the composition comprises 20 to 50 phr, more preferably 25 to 45 phr of at least one plasticising oil.

The plasticising oil may be, in full or in part, from commercial compositions of the solid diene elastomeric polymer, where it acts as a thinner (extender).

The term "plasticising oil" means a process oil derived from petroleum or a mineral oil or a vegetable oil or a synthetic oil or combinations thereof.

The plasticising oil does not derive from the polymerisation of conjugated dienes, unlike the liquid polymer and diene elastomeric polymers as defined herein.

Preferably, the plasticising oil exhibits one or more of the following features:
a weight average molecular weight (Mw) not higher than 600 g/mol or, if of the RAE class, a weight average molecular weight of between 400 and 10,000 g/mol,
   and/or
a glass transition temperature (Tg) lower than -30°C.

Preferably, the plasticising oil is a process oil derived from petroleum selected from paraffins (saturated hydrocarbons), naphthenes, aromatic polycyclic and mixtures thereof.

Examples of suitable process oils derived from petroleum are aromatic, paraffinic, naphthenic oils such as MES (Mild Extract Solvated), DAE (Distillate Aromatic Extract), TDAE (Treated Distillate Aromatic Extract), TRAE (Treated Residual Aromatic Extract ), RAE (Residual Aromatic Extract) known in the industry.

The term RAE means a complex mixture of mainly polycyclic aromatic hydrocarbons obtained by extracting the residue of distillation of crude oil with solvents (CAS No. 64742-10-5).

Preferably, the plasticising oil is a process oil derived from petroleum with a low aromatic content, selected for example from TDAE, TRAE, MES, paraffinic or naphthenic oils.

Examples of suitable plasticising oils are oils derived from petroleum: NYTEX 4700 marketed by Nynas, EXTENSOIL 1471 marketed by Repsol, VIVATEC 500 marketed by H&R; and vegetable oils: RADIA 6132 marketed by Oleon, Agripure AP 18 and Agripure AP 75 marketed by Cargill.

Alternatively, the plasticising oil is an oil of natural or synthetic origin derived from the esterification of glycerol with fatty acids, comprising glycerine triglycerides, diglycerides, monoglycerides or mixtures thereof.

Preferably, these oils have a glass transition temperature (Tg) lower than -70 °C.

Examples of suitable vegetable oils are sunflower, soybean, linseed, rapeseed, castor and cotton oil.

Alternatively, the plasticising oil is a synthetic oil selected from among the alkyl or aryl esters of phthalic acid or phosphoric acid. Preferably, these esters have a glass transition temperature (Tg) lower than -70 °C.

These oils may be used alone or as a mixture.

The elastomeric compositions according to the invention preferably comprise from 25 to 80 phr, more preferably from 30 to 60 phr of plasticising mixture, by plasticising mixture meaning all the components liquid polymer, resin, if present, and plasticising oil.

The amount of plasticising mixture corresponds to the sum of the amounts of liquid polymer, resin, if present, and plasticising oil as defined above.

The elastomeric compositions according to the invention preferably comprise at least 20 phr, 30 phr or 40 phr of plasticising mixture.

Preferably, the compositions comprise no more than 90 phr, 80 phr or 70 phr, of plasticising mixture.

The three components of the plasticising mixture, i.e. the at least one liquid polymer, the at least one resin, optional, and the at least one plasticising oil, are not necessarily pre-mixed together to give a separate plasticising mixture but in the preparation they may be added to the composition individually, in any sequence or step of the preparation process, as detailed hereinafter, or may be associated in whole or in part with one or more of the other components, such as in the case of the plasticising oils which are, at least in part, already incorporated into the commercial elastomeric polymers as thinners.

The elastomeric composition for tyres according to the invention comprises 100 phr of a mixture of solid diene elastomeric polymers, comprising, preferably consisting of:
15 to 50 phr of at least one solid polybutadiene (BR) having
   a weight average molecular weight Mw of 350,000 to 550,000 g/mol and a cis double bond content of 95 to 99%,
10 to 60 phr of at least one emulsion-polymerised solid styrene butadiene copolymer (E-SBR) having
   a Tg from -60 °C to -25 °C, a Mooney viscosity between 40 and 60 MU and a % styrene content between 20% and 45%, and
15 to 75 phr of at least one solution-polymerised styrene-butadiene copolymer (S-SBR), chain-functionalised with multi-branch coupling, having
   a weight average molecular weight Mw greater than 800,000 g/mol, preferably than 900,000 g/mol,
   an amount of styrene between 30% and 45% and an amount of vinyl between 15% and 40%,
   a Tg between -45 °C and -25 °C and/or
   a Mooney viscosity, measured at 160 °C, between 70 and 90 MU.

In one embodiment, the mixture of solid diene elastomeric polymers of the composition according to the invention comprises, preferably consists of:
15 to 50 phr of at least one solid polybutadiene (BR),
10 to 60 phr of at least one emulsion-polymerised solid styrene butadiene copolymer (E-SBR), and
15 to 75 phr of at least one solution-polymerised styrene-butadiene copolymer (S-SBR), chain-functionalised with multi-branch coupling agents.

In one embodiment, the mixture of solid diene elastomeric polymers of the composition according to the invention comprises, preferably consists of:
25 to 40 phr of at least one solid polybutadiene (BR),
10 to 40 phr of at least one emulsion-polymerised solid styrene butadiene copolymer (E-SBR), and
30 to 65 phr of at least one solution-polymerised styrene-butadiene copolymer (S-SBR), chain-functionalised with multi-branch coupling agents.

In one embodiment, in the elastomeric composition of the invention the solid polybutadiene (BR) has a weight average molecular weight Mw of 350,000 to 550,000 g/mol and a cis double bond content of 95 to 99%,
the emulsion-polymerised solid styrene butadiene copolymer (E-SBR) has a Tg from -60 °C to -25 °C, a Mooney viscosity between 40 and 60 MU and a % styrene content between 20% and 45%, and
the solution-polymerised styrene-butadiene copolymer (S-SBR), chain-functionalised with multi-branch coupling, has
a weight average molecular weight Mw greater than 800,000 g/mol, preferably than 900,000 g/mol, and/or
an amount of styrene comprised between 30% and 45% and an amount of vinyl comprised between 15% and 40%, and/or
a Tg between -45 °C and -25 °C and/or
a Mooney viscosity, measured at 160 °C, between 70 and 90 MU.

In a preferred embodiment, the elastomeric composition for tyres according to the invention comprises 100 phr of a mixture of solid diene elastomeric polymers, comprising, preferably consisting of:
10 to 50 phr of at least one solid polybutadiene (BR) having
   a weight average molecular weight Mw between 300,000 g/mol and 600,000 g/mol and a cis double bond content of at least 95%,
10 to 70 phr of at least one emulsion-polymerised solid styrene butadiene copolymer (E-SBR) having
   a Tg of -60 °C to -20 °C,
   a Mooney viscosity (at 160 °C) between 30 and 70 MU, and
   an amount of styrene between 15% and 50%,
10 to 80 phr of at least one solution-polymerised solid styrene butadiene copolymer (S-SBR), chain-functionalised with multi-branch coupling agents and having:
   a weight average molecular weight Mw greater than 800,000 g/mol,
   an amount of styrene between 25% and 50% and an amount of vinyl between 10% and 50%,
   a Tg between -50 °C and -20 °C, and
   a Mooney viscosity measured at 160 °C between 60 and 100 MU.

In a more preferred embodiment, the elastomeric composition for tyres according to the invention comprises 100 phr of a mixture of solid diene elastomeric polymers, comprising, preferably consisting of:
15 to 50 phr of at least one solid polybutadiene (BR) having
   a weight average molecular weight Mw of 350,000 to 550,000 g/mol and a cis double bond content of 95 to 99%,
10 to 60 phr of at least one emulsion-polymerised solid styrene butadiene copolymer (E-SBR) having
   a Tg of -60 °C to -25°C,
   a Mooney viscosity between 40 and 60 MU, and
   a % styrene content between 20% and 45%,
15 to 75 phr of at least one solution-polymerised styrene-butadiene copolymer (S-SBR), chain-functionalised with multi-branch coupling, having
   a weight average molecular weight Mw greater than 800,000 g/mol, preferably than 900,000 g/mol,
   an amount of styrene between 30% and 45% and an amount of vinyl between 15% and 40%,
   a Tg between -45°C and -25°C, and
   a Mooney viscosity, measured at 160 °C, between 70 and 90 MU.

The solid diene elastomeric polymers suitable for the present composition are elastomeric polymers or copolymers generally having a glass transition temperature (Tg) lower than 20 °C, preferably in the range from 0 °C to -110 °C.

Preferably, the solid diene elastomeric polymers of the present elastomeric compound have a weight average molecular weight (Mw) greater than 80,000 g/mol.

By solid polybutadiene (BR), it is meant a polymer which derives from the polymerisation of 1,3-butadiene, optionally in the presence of other conjugated diolefins as described below, wherein 1,3-dibutadiene is present in an amount not less than 50%, by weight with respect to the total weight of the monomers.

Examples of suitable polybutadienes are polybutadiene with a high content of double 1,4-cis bonds, polybutadiene with a high content of vinyl units, metallocene polybutadiene, 1,3-butadiene/acrylonitrile copolymers.

Examples of preferred commercial polybutadienes (BR) are polybutadiene (Europrene Neocis^{®} BR40) - (Versalis), SKD NHEODIMIO (Nizhnekamskneftechim Export), BUNA CB 29 MES (Lanxess).

Preferably, the solid polybutadiene (BR) has a weight average molecular weight Mw of 370,000 to 550,000 g/mol and a cis double bond content of 96 to 98%.

Preferably, the at least one solid polybutadiene (BR) is present in the present composition in an amount ranging from 15 to 45 phr, more preferably from 25 to 35 phr.

Preferably the solid polybutadiene (BR) has a glass transition temperature (Tg) lower than -85 °C, preferably in the range from -110 °C to -90 °C.

In the present composition, one or more solid polybutadienes may be present in mixture.

The present elastomeric composition comprises more than one solid styrene-butadiene copolymer (SBR).

In general, by solid styrene-butadiene copolymer SBR it is meant a copolymer which derives from the polymerisation of one or more diolefins conjugated with at least one monovinylarene monomer, and optionally polar comonomers. Preferably, the conjugated diolefins contain from 4 to 12, more preferably from 4 to 8 carbon atoms and are preferably selected from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene or mixtures thereof. 1,3-butadiene and isoprene are particularly preferred.

Preferably, monovinylarenes contain from 8 to 20, preferably from 8 to 12 carbon atoms and are preferably selected from styrene, 1-vinylnaphthalene, 2-vinylnaphthalene, alkyl, cycloalkyl, aryl, alkylaryl or arylalkyl derivatives of styrene, such as, for example, α-methylstyrene, 3-methylstyrene, 4-propylstyrene, 4-cyclohexylstyrene, 4-dodecylstyrene, 2-ethyl-4-benzylstyrene, 4-p-tolyl-styrene, 4-(4-phenylbutyl)styrene, or mixtures thereof. Styrene is particularly preferred.

Preferably, the polar comonomers are selected from vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile or mixtures thereof.

The present elastomeric composition comprises at least one emulsion-polymerised solid styrene-butadiene copolymer (E-SBR).

By emulsion-polymerised solid styrene-butadiene copolymer (E-SBR) it is meant a copolymer which derives from the emulsion polymerisation of one or more diolefins conjugated with at least one monovinylarene monomer, and optionally polar comonomers as defined above.

Examples of suitable emulsion-polymerised solid styrene-butadiene copolymers (E-SBR) are the copolymers of styrene/1,3-butadiene (SBR), styrene/isoprene/1,3-butadiene, styrene/1,3-butadiene/acrylonitrile.

Examples of suitable commercial emulsion-polymerised solid styrene-butadiene copolymers (E-SBR) are SBR 1723 TDAE from Sibur, BUNA^{™} SBR 1723 from Synthos, INTOL^{®} 1723 from Versalis (Eni Group), SBR 1739 from LG Chem, SBR 1739 from Versalis, Nipol^{®} SBR 1739 from ZEON Corporation and Trinseo BUNA^{™} SB 1739 Schkopau.

Preferably, the emulsion-polymerised solid styrene-butadiene copolymer (E-SBR) has a Tg of -58 °C to -28 °C, a Mooney viscosity of between 43 and 57 MU and a % styrene content of between 20% and 43%.

Preferably, the at least emulsion-polymerised solid styrene-butadiene copolymer (E-SBR) is present in the present composition in an amount ranging from 10 to 60 phr, more preferably from 10 to 50 phr.

Preferably, the emulsion-polymerised solid styrene-butadiene copolymer (E-SBR) has a glass transition temperature (Tg) lower than -10 °C, preferably in the range - 60 - 40 °C.

In the present composition, one or more emulsion-polymerised solid styrene-butadiene copolymers (E-SBR) may be present in admixture.

The present elastomeric composition comprises at least one solution-polymerised solid styrene-butadiene copolymer (S-SBR) as defined herein.

By solution-polymerised solid styrene-butadiene copolymer (S-SBR) it is meant a copolymer which derives from the solution polymerisation of one or more diolefins conjugated with at least one monovinylarene monomer, and optionally polar comonomers as defined above.

The present solution-polymerised solid styrene-butadiene copolymer (S-SBR) is a polymer functionalised along the chain with multi-branch coupling agents and, optionally, also at the ends thereof.

In the present solution-polymerised solid styrene-butadiene copolymer (S-SBR), the functionalisation may be introduced into the chain by reaction with suitable multi-branch coupling agents, and possibly with termination agents at the ends. In particular, the diene elastomeric polymers obtained by anionic polymerisation in the presence of an organometallic initiator (in particular, an organolithium initiator) may be functionalised by reacting the residual organometallic groups derived from the initiator with suitable terminating agents and/or coupling agents such as, for example, amines, amides, imines, carbodiimides, alkyltin halides, substituted benzophenones, alkoxysilanes, aryloxy silanes, alkyldithiols, alkyldithiolsilanes, carboxyalkylthiols, carboxyalkylthiolsilanes, and thioglycols.

Examples in general of terminating agents or coupling agents known in the art are described, for example in patents EP2408626, EP2271682, EP3049447A1, EP2283046A1, EP2895515A1, EP451604, US4742124, WO2015086039A1 and WO2017211876A1.

Examples of particularly suitable multi-branch coupling agents are the polyorganosiloxanes described in par. 0040 to 0043 of the patent application SG10201800553S(A) in the name of JSR Corp, in particular with reference to the Formula (6) 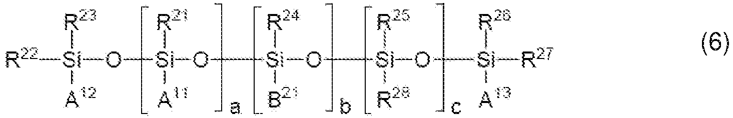 and the meanings of the variables reported therein.

A specific example of a preferred multi-branch coupling agent is the following product of Formula (6.1):

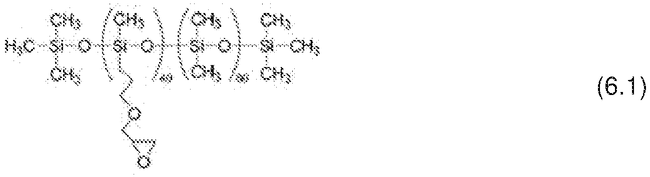

Preferably, said at least one solution-polymerised solid styrene-butadiene copolymer (S-SBR) functionalised with multi-branch coupling agents is a functionalised polymer obtained from a styrene/1,3-butadiene, styrene/isoprene/1,3-butadiene, styrene/1,3-butadiene/acrylonitrile, and mixtures thereof.

Suitable functionalised solution-polymerised solid styrene-butadiene copolymers (S-SBR) are for example described in patent application SG10201800553S(A) in the name of JSR Corp.

An example of a preferred solution-polymerised solid styrene-butadiene copolymer functionalised with multi-branch coupling agents is HPR 620 from JSR.

Preferably, the at least one solution-polymerised solid styrene-butadiene copolymer (S-SBR) functionalised with multi-arm coupling agents has a weight average molecular weight Mw of between 500,000 and 2,000,000 g/mol, more preferably between 800,000 and 1,200,000 g/mol.

In one embodiment, the solution-polymerised solid styrene butadiene copolymer (S-SBR), functionalised with multi-branch coupling agents is characterised by:
a weight average molecular weight Mw greater than 500,000 g/mol,
an amount of styrene between 25% and 50% and an amount of vinyl between 10% and 50%,
a Tg between -50 °C and -20 °C, and
a Mooney viscosity at 160 °C between 60 and 100 MU.

Preferably, the at least one solution-polymerised solid styrene butadiene copolymer (S-SBR) functionalised with multi-branch coupling agents is present in the present composition in an amount of between 25 and 80 phr, more preferably between 30 and 75 phr.

Preferably, the at least one solution-polymerised solid styrene butadiene copolymer (S-SBR) functionalised with multi-branch coupling agents has a glass transition temperature (Tg) below -10 °C, preferably in the range of from -50 to 20 °C.

One or more solution-polymerised solid styrene butadiene copolymers (S-SBR) functionalised with multi-branch coupling agents in admixture may be present in the present composition.

The solid diene elastomeric polymers making up the mixture may optionally also be functionalised by reaction with suitable conventional terminating agents or coupling agents (i.e. Non-multi-branched agents) (solid diene elastomeric polymers a'). In particular, the diene elastomeric polymers obtained by anionic polymerisation in the presence of an organometallic initiator (in particular, an organolithium initiator) may be functionalised by reacting the residual organometallic groups derived from the initiator with suitable terminating agents or coupling agents such as, for example, imines, carbodiimides, alkyltin halides, substituted benzophenones, alkoxysilanes or aryloxysilanes.

In one embodiment, the mixture of solid diene elastomeric polymers comprises, preferably consists of,
20 phr to 45 phr of at least one solid polybutadiene (BR) having a weight average molecular weight Mw between 350,000 and 550,000 g/mol and a cis double bond content of at least 95%,
10 to 55 phr of at least one emulsion-polymerised solid styrene butadiene copolymer (E-SBR) having a Tg from -60 °C to -25 °C, a Mooney viscosity between 40 and 60 MU and a % styrene content between 20% and 43%,
10 to 70 phr of at least one solution-polymerised solid styrene butadiene copolymer (S-SBR), chain-functionalised with multi-branch coupling agents having a weight average molecular weight Mw greater than 800,000 g/mol, preferably than 900,000 g/mol, an amount of styrene between 25% and 50% and an amount of vinyl between 10% and 50%, a Tg between -50 °C to -20 °C and a Mooney viscosity, measured at 160 °C, of between 60 and 100 MU.

More preferably, the mixture of solid diene elastomeric polymers comprises, preferably consists of
25 to 35 phr of at least one solid polybutadiene (BR) having a weight average molecular weight Mw between 370,000 and 550,000g/mol and a cis double bond content of at least 97%,
10 to 45 phr of at least one emulsion-polymerised solid styrene butadiene copolymer (E-SBR) having a Tg from -58°C to -28°C, a Mooney viscosity between 45 and 55 MU and a % styrene content between 22% and 42%,
30 to 65 phr of at least one solution-polymerised solid styrene butadiene copolymer (S-SBR), chain-functionalised with multi-branch coupling agents having a weight average molecular weight Mw greater than 800,000 g/mol, preferably than 900,000 g/mol, an amount of styrene between 30% and 45% and an amount of vinyl between 15% and 40%, a Tg between -45 °C to -25 °C and a Mooney viscosity, measured at 160 °C, of between 70 and 90 MU.

The present elastomeric composition comprises at least one reinforcing filler.

The elastomeric composition according to the present invention preferably comprises at least 50 phr, at least 60 phr, at least 70 phr or at least 80 phr of at least one reinforcing filler.

Preferably, the composition comprises no more than 150 phr, 140 phr, 130 phr, 120 phr, 110 phr or 100 phr of at least one reinforcing filler.

Preferably, the composition comprises from 10 to 150 phr, from 30 to 120 phr, from 50 to 120 phr, from 70 to 110 phr or from 80 to 100 phr of at least one reinforcing filler.

Preferably, the reinforcing filler is selected from carbon black, a white filler or mixtures thereof.

In one embodiment, said reinforcing filler is a white filler selected from hydroxides, oxides and hydrated oxides, salts and hydrated salts of metals, silica, silicate fibres, optionally derivatised and/or modified, or mixtures thereof.

Preferably, said reinforcing filler is silica.

The silica present in the composition may interact during mixing with the silane coupling agent, added for the purpose of making it compatible and dispersible in the elastomeric polymer.

In one embodiment, said reinforcing filler comprises or consists of carbon black.

Preferably, said carbon black is present in the elastomeric composition in an amount ranging between 5 phr and 120 phr, preferably between 10 phr and 110 phr.

Preferably, said carbon black is present in the elastomeric composition in an amount higher than 35 phr, more preferably higher than 40 phr.

Preferably, the carbon black reinforcing filler is selected from those having a surface area not smaller than 20 m²/g, preferably larger than 50 m²/g (as determined by STSA - statistical thickness surface area according to ISO 18852:2005).

An example of carbon black is N234 marketed by Birla Group (India) or by Cabot Corporation.

In one embodiment, said reinforcing filler comprises a plurality of mixed fillers among those defined above, preferably comprising mixed silica and carbon black.

The elastomeric composition comprises at least one vulcanising agent.

Preferably, the composition comprises at least 1.5 phr, 2 phr, 3 phr or 4 phr of at least one vulcanising agent.

Preferably, the composition comprises no more than 10 phr or 8 phr of at least one vulcanising agent.

Preferably, the composition comprises 1 to 10 phr or 2 to 10 phr of at least one vulcanising agent.

Preferably, the vulcanising agent is selected from among sulphur, and sulphur-containing molecules that act as sulphur donors.

Sulphur or derivatives thereof may advantageously be selected, for example, from:
(i) soluble sulphur (crystalline sulphur);
(ii) insoluble sulphur (polymeric sulphur);
(iii) sulphur dispersed in oil (for example 33% sulphur known by the trade name Crystex OT33 from Solutia);
(iv) sulphur donor compounds such as, for example, caprolactam disulphide (CLD), bis[(trialkoxysilyl)propyl]polysulphides, dithiophosphates; thiurams, dithiodimorphlines and caprolactam-disulphide or mixtures thereof.

Alternatively, the vulcanising agent may be selected from peroxides, such as dialkylperoxides R - O - O - R, wherein R is an alkyl group, alkyl-aryl peroxides R - O - O - R', wherein R is a alkyl and aryl R' group, diarylperoxides R' - O - OR', wherein R' is an aryl group, diacyl peroxides R-C(O)-O-O-(O)C-R', wherein R and R' are aryl and/or alkyl groups, peroxyketals R-O-O-(R)C(R')-O-O-R', wherein R and R' are aryl and/or alkyl groups, peroxyesters R-C(O)-O-O-R', wherein R and R' are aryl and/or alkyl groups, metal oxides, such as for example zinc oxide, quinones, resins and organic bases.

The vulcanising agent is preferably used together with adjuvants such as activators, vulcanisation accelerants and/or retardants known to the man skilled in the art.

Vulcanisation activators that are particularly effective are zinc compounds. In particular, ZnO, ZnCOs, zinc salts of saturated or unsaturated fatty acids containing from 8 to 18 carbon atoms, are used.

For example, zinc stearate is used, preferably formed in situ in the elastomeric composition, by ZnO and fatty acid, and also magnesium stearate, formed by MgO, or mixtures thereof.

Said vulcanisation activators are preferably used in the elastomeric composition in an amount of from 0.5 phr to 10 phr. More preferably, said vulcanisation activators are used in the elastomeric composition in an amount of from 1 phr to 5 phr. Even more preferably, said vulcanisation activators are used in the elastomeric composition in an amount of from 1.5 phr to 3.5 phr.

An example of activating agent is the product Aktiplast ST marketed by Rheinchemie.

Preferably, the elastomeric composition may further comprise at least one vulcanisation accelerant.

Vulcanisation accelerants that are commonly used may be for example selected from dithiocarbamates, guanidines, thioureas, thiazoles, sulphenamides, sulphenimides, thiurams, amines, xanthates, or mixtures thereof.

An example of vulcanisation accelerant is the N-cyclohexyl-2-benzothiazyl-sulfenamide Vulkacit^{®} CZ/C marketed by Lanxess.

Said vulcanisation accelerants are preferably used in the elastomeric composition in an amount of from 0.05 phr to 10 phr

More preferably, said vulcanisation accelerants are used in the elastomeric composition in an amount of from 0.1 phr to 5 phr.

Even more preferably, said vulcanisation accelerants are used in the elastomeric composition in an amount of from 0.5 phr to 3 phr.

The present elastomeric composition may optionally comprise one or more vulcanisation retardants such as, for example, N-cyclohexylthio phthalimide (VULKALENT G, - Lanxess).

Preferably, if present, said retardants are used in an amount of between 0.05 phr and 2 phr.

The elastomeric composition according to the invention may further comprise at least one silane coupling agent, preferably in amounts ranging from 0.5 to 20 phr. Preferably, said silane coupling agent is a silane coupling agent selected from those having at least one hydrolysable silane group which can be identified, for example, by the following general formula (I):

(R')₃Si-CₙH₂ₙ-X (I)

wherein the R' groups, equal or different from each other, are selected from: alkyl, alkoxy or aryloxy groups or from halogen atoms, provided that at least one of the R' groups is an alkoxy or an aryloxy group; n is an integer of between 1 and 6, ends included; X is a group selected from: nitrose, mercapto, amino, epoxide, vinyl, imide, chloro, -(S)ₘCₙH₂ₙ-Si-(R')₃ and -S-COR', wherein m and n are integers of between 1 and 6, end included and the R' groups are as defined above. Among the silane coupling agents, bis(3-triethoxysilylpropyl)tetrasulphide and bis(3-triethoxysilylpropyl)disulphide are particularly preferred. Said silane coupling agents may be used as such or as a suitable mixture with an inert filler (such as carbon black) so as to facilitate their incorporation into the elastomeric composition.

Preferably, said silane coupling agent is present in the elastomeric composition in an amount ranging between 0.5 phr and 10 phr, preferably between 0.5 phr and 7 phr.

An example of the silane coupling agent is TESPT: bis(3-triethoxysilylpropyl)tetrasulphide Si69 marketed by Evonik.

The elastomeric composition may comprise other commonly used additives, selected according to the specific application for which the composition is intended, for example anti-ageing agents, anti-reversion agents, adhesives, antiozonants, in particular of the p-phenylenediamine type, antioxidants, waxes, fibres (for example Kevlar^{®} pulp), or mixtures thereof.

In one embodiment, the elastomeric composition of the invention comprises, preferably consists of
0 to 20 phr of at least one liquid polymer selected from a liquid polybutadiene, a liquid styrene butadiene copolymer and mixtures thereof,
0 to 10 phr, preferably at least 1 phr, of at least one resin,
20 to 40 phr of at least one plasticising oil,
100 phr of a mixture of solid diene elastomeric polymers,
wherein said mixture of polymers comprises:
   20 phr to 40 phr of at least one solid polybutadiene (BR) having a weight average molecular weight Mw between 370,000 and 550,000 g/mol and a cis double bond content of at least 97%,
   10 to 50 phr of at least one emulsion-polymerised solid styrene butadiene copolymer (E-SBR) having a Tg ranging from -57 °C to -25 °C, a Mooney viscosity value between 45 and 55 MU and a % styrene content of between 22% and 42%,
   25 to 70 phr of at least one solution-polymerised solid styrene butadiene copolymer (S-SBR), chain-functionalised with multi-branch coupling agents having a weight average molecular weight Mw greater than 800,000 g/mol, preferably than 900,000 g/mol, an amount of styrene between 30% and 45% and an amount of vinyl between 15% and 40%, a Tg of between -45 °C and -25 °C, a Mooney viscosity, measured at 160 °C, between 70 and 90 MU,
60 to 100 phr of at least one reinforcing filler, and
1 to 4 phr of at least one vulcanising agent.

In a preferred embodiment, the elastomeric composition of the invention comprises, preferably consists of:
0 to 12 phr, preferably 1 to 12 phr, of at least one resin,
20 to 40 phr of at least one plasticising oil,
100 phr of a mixture of solid diene elastomeric polymers,
wherein said mixture of polymers comprises, preferably consists of:
   20 phr to 40 phr of at least one solid polybutadiene (BR) having a weight average molecular weight Mw between 370,000 and 550,000 g/mol and a cis double bond content of at least 97%,
   10 to 50 phr of at least one emulsion-polymerised solid styrene butadiene copolymer (E-SBR) having a Tg ranging from -57 °C to -25 °C, a Mooney viscosity value between 45 and 55 MU and a % styrene content of between 22% and 42%
   25 to 70 phr of at least one solution-polymerised solid styrene butadiene copolymer (S-SBR), chain-functionalised with multi-branch coupling agents having a weight average molecular weight Mw greater than 800,000 g/mol, preferably than 900,000 g/mol, between 30% and 45% of styrene and between 15% and 40% of vinyl, a Tg of between -45 °C and -25 °C, a Mooney viscosity, measured at 160 °C, between 70 and 90 MU,
at least 60 phr of at least one reinforcing filler, and
at least 1.0 phr, preferably at least 2 phr, of at least one vulcanising agent.

In a more preferred embodiment, the present elastomeric composition comprises, preferably consists of:
10 to 20 phr of at least one liquid polymer selected from a liquid polybutadiene, a liquid styrene butadiene copolymer and mixtures thereof,
3 to 8 phr of at least one resin, 15 to 35 phr of at least one plasticising oil,
100 phr of a mixture of solid diene elastomeric polymers,
wherein said mixture of polymers comprises, preferably consists of:
   20 phr to 40 phr of at least one solid polybutadiene (BR) having a weight average molecular weight Mw between 370,000 and 550,000 g/mol and a cis double bond content of at least 97%,
   10 to 30 phr of at least one emulsion-polymerised solid styrene butadiene copolymer (E-SBR) having a Tg ranging from -57 °C to -25 °C, a Mooney viscosity value between 45 and 55 MU and a % styrene content of between 22% and 42%
   40 to 70 phr of at least one solution-polymerised solid styrene butadiene copolymer (S-SBR), chain-functionalised with multi-branch coupling agents having a weight average molecular weight Mw greater than 800,000 g/mol, preferably than 900,000 g/mol, an amount of styrene between 30% and 45%, and an amount of vinyl between 15% and 40%, a Tg of between -45 °C and -25 °C, a Mooney viscosity, measured at 160 °C, between 70 and 90 MU,
at least 60 phr of at least one reinforcing filler, and
at least 1 phr, preferably at least 2 phr, of at least one vulcanising agent.

Preferably the elastomeric composition of the invention does not comprise omega-9 fatty acid amides such as those described for example in US2018/0362740A1 at par. 043.

A further aspect of the present invention is an elastomeric compound for tread band of a tyre obtained by mixing and vulcanising the elastomeric composition according to the invention.

Advantageously, the elastomeric compound according to the invention has one or more of the following features measured according to the methods reported in the experimental part:
- a Mooney viscosity (1+4 at 100 °C) higher than 50.00 MU, typically higher than 60 MU and between 60 and 90 MU;
- a density between 1.100 and 1.500 g/cm³;
- a load at 300% elongation (Ca3) higher than 8.50 MPa, preferably higher than 8.60 MPa, typically between 8.60 and 10.60 MPa;
- a breaking load higher than 17 MPa, preferably 19 MPa;
- an elongation at break higher than 500%, preferably higher than 600%;
- an IRHD hardness at 23 °C between 60 and 70, preferably between 62 and 68 IRHD degrees;
- a tear strength at 23 °C higher than 45.00 N/mm, preferably higher than 46.00 N/mm, typically between 46 and 55 N/mm;
- a resistance to abrasion with a loss of material of less than 75.00 mm³, preferably less than 70.00 mm³, more preferably less than 65.00 mm³;
- a dynamic elastic modulus E' at 23 °C lower than 10.00 MPa, preferably lower than 9.00 MPa, typically between 8.00 and 8.90 MPa;
- a loss factor (Tan delta) at 23 °C calculated as the ratio between the viscous dynamic modulus (E") and the dynamic elastic modulus (E') not less than 0.370, preferably not less than 0.380, more preferably not less than 0.400.

Preferably, the loss factor is between 0.400 and 0.420.

The present elastomeric compound may be prepared according to a process which typically comprises one or more mixing steps in at least one suitable mixer, in particular at least one mixing step (i) (non-productive) and a mixing step (ii) (productive) as defined above.

Each mixing step may comprise several intermediate processing steps or sub-steps, characterised by the momentary interruption of the mixing to allow the addition of one or more ingredients but generally without intermediate discharge of the compound.

The mixing may be carried out, for example, using an open mixer of the "open-mill" type or an internal mixer of the type with tangential rotors (Banbury^{®}) or with interpenetrating rotors (Intermix), or in continuous mixers of the Ko-Kneader^{™} type (Buss^{®}) or of the twin-screw or multi-screw type.

Typically, after one or more thermo-mechanical treatment steps, the vulcanisation agent is incorporated into the materials, preferably together with vulcanisation accelerants and/or retardants, in the final treatment step, production step (ii), where the temperature is generally kept below 120 °C and preferably below 100 °C, in order to prevent any undesired pre-vulcanisation phenomenon. Subsequently, the vulcanisable compound thus obtained can be subsequently calendared, for example in the form of a sheet or extruded, for example to form a profiled rubber element such as the tread band, which is incorporated into the tyre and subjected to vulcanisation, according to known techniques.

A further aspect of the present invention consists of a tyre tread band comprising an elastomeric compound obtained from the elastomeric composition according to the invention.

Preferably, said component is a tread band comprising at least 50%, preferably at least 70% or 90% or 95% or 100% of an elastomeric compound according to the invention.

A further aspect of the present invention is a tyre for vehicle wheels comprising a tread band according to the invention.

In the tyre of the invention, the tread band comprises or consists of the present elastomeric compound.

The tyre according to the invention may be a tyre for vehicles with two, three or four wheels and may be for summer or winter use or for all seasons.

The tyre of the invention is suitable for four-wheeled vehicles for use on the road, for example it may be a tyre suitable for equipping medium- and high-engine capacity cars for transporting people (maximum chord measurements from 195 mm to 245 mm).

The tyre according to the invention may be suitable for electric vehicles.

The tyre according to the invention may be a tyre for small utility cars or for high performance vehicles (HP high performances - UHP ultra high performances) with maximum chord sizes for example from 145 mm to 355 mm.

These tyres are preferably mounted on rims having seating diameters equal to or larger than 13 inches, preferably not larger than 24 inches, more preferably of between 16 inches and 23 inches.

The tyre according to the invention may be a tyre for passenger cars, including both an automobile tyre, such as for example a high-performance tyres, and a tyre for light transport vehicles, for example vans, campers, pick-up, typically with total mass at full load equal to or less than 3500 kg.

The tyre of the invention may be an HP (High Performance) or UHP (Ultra High Performance) tyre intended for equipping vehicles for the transport mainly of people, such as Sedan, Minivan, family, SUVs (Sport Utility Vehicles) and/or CUVs (Crossover Utility Vehicles), typically a tyre that allows driving at high speeds.

The high and ultra-high performance tyres are in particular those which allow to reach speeds higher than at least 160 km/h, higher than 200 km/h up to over 300 km/h. Examples of such tyres are those belonging to the classes "T","U", "H", "V", "Z", "W", "Y" according to the E.T.R.T.O. - (European Tyre and Rim Technical Organisation) standards, in particular for four-wheel high-power vehicles. Typically, the tyres belonging to these classes have a section width equal to 185 mm or greater, preferably not greater than 325 mm, more preferably of between 195 mm and 325 mm. These tyres are preferably mounted on rims having seating diameters equal to or larger than 15 inches, preferably not larger than 24 inches, more preferably of between 17 inches and 22 inches. By SUV and CUV it is meant vehicles with raised distribution, typically four-wheel drive, typically having a displacement greater than or equal to 1800 cc, more preferably of between 2000 cc and 6200 cc. Preferably, these vehicles have a mass greater than 1400 Kg, more preferably of between 1500 Kg and 3000 Kg.

The tyre of the invention may also be used in vehicles other than the aforementioned cars, for example in high-performance road and sports motorcycles, i.e. motorcycles capable of reaching speeds even higher than 270 km/h. Such motorcycles are those that belong to the category typically identified with the following classifications: hypersport, supersport, sport touring, and for lower speed ratings: scooter, street enduro and custom.

The term "tyre for motorcycle wheels" means a tyre having a high curvature ratio (typically greater than 0.200), capable of reaching high angles of inclination (roll angles) of the plane of symmetry of the motorcycle with respect to the vertical plane, during cornering of the motorcycle.

In a preferred embodiment, the tyre of the invention is a motorcycle tyre wherein the tread band comprises the elastomeric compound of the invention, more preferably a motorcycle tyre of the big enduro type.

In this preferred embodiment, the tyre of the invention is intended to be mounted on the front wheel and/or rear wheel of motorcycles of the "big enduro" (or "big adventuring" or "dual purpose") type, i.e. large displacement, power and mass, designed to be driven both on paved roads and off-road. These motorcycles generally have a cylinder capacity equal to or greater than 1000 cm³, a power equal to or greater than 100 cv, a maximum torque equal to or greater than 100 Nm and a mass equal to or greater than 180 kg.

In this specific application, the tyre of the invention is particularly advantageous as it combines a high resistance to tearing and abrasion, particularly useful in off-road driving, with excellent grip in cold and wet conditions, which may instead be encountered in road driving.

Examples of "big enduro" motorcycles are the BMW GS 1250 R, the KTM 1290 Super Adventure R and the Honda CRF1100L Africa Twin.

In one embodiment, the tyre according to the invention comprises at least:
- a carcass structure comprising at least a carcass ply having opposite lateral edges associated to respective bead structure;
- possibly a pair of sidewalls applied to the lateral surfaces of the carcass structure, respectively, in an axially outer position;
- possibly a belt structure applied in radially outer position with respect to the carcass structure;
- a tread band applied in a radially outer position to said carcass structure or, if present, a belt structure,
- possibly a layer of elastomeric material, referred to as under-layer, applied in a radially inner position with respect to said tread band,
wherein at least one component, preferably at least the tread band, comprises, or preferably consists of, the elastomeric compound according to the invention.

In one embodiment, the tyre according to the invention is a tyre for bicycle wheels. A tyre for bicycle wheels typically comprises a carcass structure turned around a pair of bead cores at the beads and a tread band comprising the, preferably consisting of, the elastomeric compound of the invention, arranged in a radially outer position with respect to the carcass structure.

The tyre according to the invention may be manufactured according to a process comprising:
- building components of a green tyre on at least one forming drum;
- shaping, moulding and vulcanising the tyre;
wherein building at least one of the components of a green tyre comprises:
- manufacturing at least one green component comprising, or preferably consisting of, the elastomeric compound according to the invention. Preferably said at least one green component is a tread band.

The Applicant has found that by virtue of the features of the tread band prepared with the present elastomeric compound it is possible to make a tyre that achieves a significant improvement in wet driving performance and at the same time maintains a high mileage, with an optimal balance of notoriously conflicting properties.

### BRIEF DESCRIPTION OF THE DRAWINGS

Figure 1 schematically shows a semi-sectional view of a tyre for vehicle wheels according to the present invention.
Figure 2 shows a perspective view of a typical big enduro rear knobby motorcycle tyre, according to a preferred embodiment of the present invention.

### DESCRIPTION OF TYRES ACCORDING TO THE INVENTION

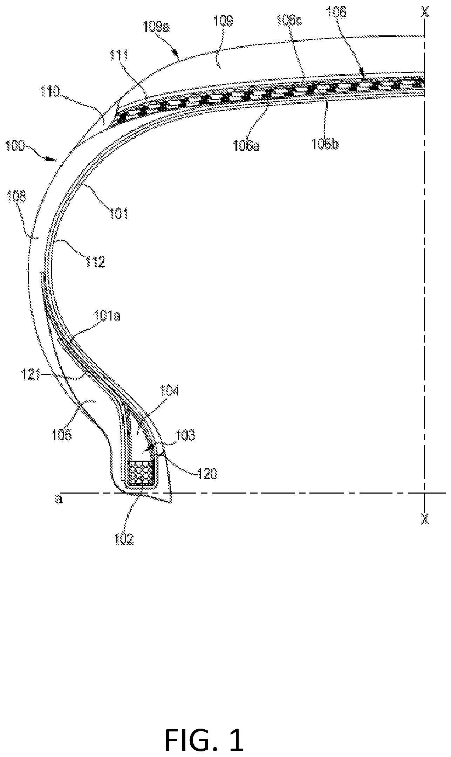

Figure 1 exemplifies a tyre according to the present invention.

With reference to Figure 1, "a" denotes an axial direction and "x-x" trace of an equatorial plane of the tyre, indicates a radial direction. For simplicity, Figure 1 shows only a portion of the tyre, the remaining portion not shown being identical and arranged symmetrically with respect to the radial direction "r".

The reference numeral (100) indicates in Figure 1 a tyre for motor vehicle wheels according to the invention formed by a plurality of structural elements.

The tyre (100) for four-wheeled vehicles comprises at least one carcass structure, comprising at least one carcass layer (101) having respectively opposite end flaps engaged with respective annular anchoring structures (102), referred to as bead cores, possibly associated to a bead filler (104). The tyre area comprising the bead core (102) and the filler (104) forms a reinforcing annular structure (103), the so-called bead, intended for anchoring the tyre onto a corresponding mounting rim, not shown.

The carcass structure is usually of radial type, i.e. the reinforcing elements of the at least one carcass layer (101) lie on planes comprising the rotational axis of the tyre and substantially perpendicular to the equatorial plane of the tyre. Said reinforcing elements may consist of textile cords, such as rayon, nylon, polyester (for example polyethylene naphthalate (PEN) or metal cords). Each reinforcing annular structure is associated to the carcass structure by folding back of the opposite lateral edges of the at least one carcass layer (101) around the annular anchoring structure (102) so as to form the so-called carcass flaps (101a) as shown in Figure 1.

In one embodiment, the coupling between the carcass structure and the reinforcing annular structure can be provided by a second carcass layer (not shown in Figure 1) applied in an axially outer position with respect to the first carcass layer.

An anti-abrasive strip (105) is arranged in an outer position of each reinforcing annular structure (103). Preferably, each anti-abrasive strip (105) is arranged at least in an axially outer position to the reinforcing annular structure (103) extending at least between the sidewall (108) and the portion radially below the reinforcing annular structure (103).

Preferably, the anti-abrasive strip (105) is arranged so as to enclose the reinforcing annular structure (103) along the axially inner and outer and radially lower areas of the reinforcing annular structure (103) so as to interpose between the latter and the wheel rim when the tyre (100) is mounted to the rim.

The carcass structure is associated to a belt structure (106) comprising one or more belt layers (106a), (106b) placed in radial superposition with respect to one another and with respect to the carcass layer, having typically metallic reinforcing cords. Such reinforcing cords may have crossed orientation with respect to a direction of circumferential development of the tyre (100). By "circumferential" direction it is meant a direction generally facing in the direction of rotation of the tyre.

At least one zero-degree reinforcing layer (106c), commonly known as a "0° belt", may be applied in a radially outermost position to the belt layers (106a), (106b), which generally incorporates a plurality of reinforcing cords, typically textile cords, textile or metallic optionally combined with one another, oriented in a substantially circumferential direction, thus forming an angle of a few degrees (such as an angle of between 0° and 6°) with respect to the equatorial plane of the tyre, and coated with an elastomeric material.

In a radially external position to the belt structure (106) a tread band (109) is applied comprising a vulcanised elastomeric compound obtained by vulcanization of an elastomeric composition according to the invention.

Moreover, respective sidewalls (108) of elastomeric material are further applied in an axially outer position on the lateral surfaces of the carcass structure, each extending from one of the lateral edges of the tread (109) at the respective reinforcing annular structure (103).

In the radially outer position, the tread band (109), comprising the elastomeric compound according to the invention, has a rolling surface (109a) intended to come into contact with the ground. Depending on the intended use, the rolling surface is smooth, as shown in Figure 1, or has circumferential and/or transversal grooves and notches (not shown in Figure 1).

An under-layer (111) is arranged between the belt structure (106) and the tread band (109).

A strip consisting of elastomeric material (110), commonly known as "mini-sidewall", can optionally be provided in the connecting zone between the sidewalls (108) and the tread band (109), this mini-sidewall being generally obtained by coextrusion with the tread band (109) and allowing an improvement of the mechanical interaction between the tread band (109) and the sidewalls (108). Preferably, the end portion of the sidewall (108) directly covers the lateral edge of the tread band (109).

Typically, a rubber layer (112), generally known as "liner", which provides the necessary impermeability to the inflation air of the tyre, can also be provided in a radially inner position with respect to the carcass layer (101).

The reinforcing annular structure (103) of the tyre may comprise a further protective layer which is generally known as "chafer" (121) or protective strip and which has the function of increasing the rigidity and integrity of the bead structure (103).

The chafer (121) usually comprises a plurality of cords incorporated in a cross-linked elastomeric material and which are generally made of textile materials (such as aramid or rayon) or of metallic materials (such as steel cords).

The rigidity of the tyre sidewall (108) can be improved by providing the reinforcing annular structure (103) with a reinforcing layer (120) generally known as "flipper" or additional strip-like insert.

The flipper (120) is a reinforcing layer which is wound around the respective anchoring annular structure (102) and the bead filler (104) so as to at least partially surround them, said reinforcing layer being arranged between the at least one carcass layer (101) and the reinforcing annular structure (103). Usually, the flipper is in contact with said at least one carcass layer (101) and said reinforcing annular structure (103).

The flipper (120) typically comprises a plurality of metallic or textile cords incorporated within a cross-linked elastomeric material.

The building of the tyre (100) as described herein, may be carried out by assembling respective semi-finished products adapted to form the components of the tyre, on a forming drum, not shown, by at least one assembling device.

At least a part of the components intended to form the carcass structure of the tyre may be built and/or assembled on the forming drum. More particularly, the forming drum is intended to first receive the possible liner, and then the carcass structure. Thereafter, devices not shown coaxially engage one of the annular anchoring structures around each of the end flaps, place an outer sleeve comprising the belt structure, the underlayer and the tread band in a coaxially centred position around the cylindrical carcass sleeve and shape the carcass sleeve according to a toroidal configuration through a radial expansion of the carcass structure, so as to cause the application thereof against a radially internal surface of the outer sleeve.

After building of green tyre, a moulding and vulcanisation treatment is generally carried out in order to determine the structural stabilisation of the tyre through cross-linking of the elastomeric compositions, as well as to impart a desired tread pattern on the tread band and to impart any distinguishing graphic signs at sidewalls.

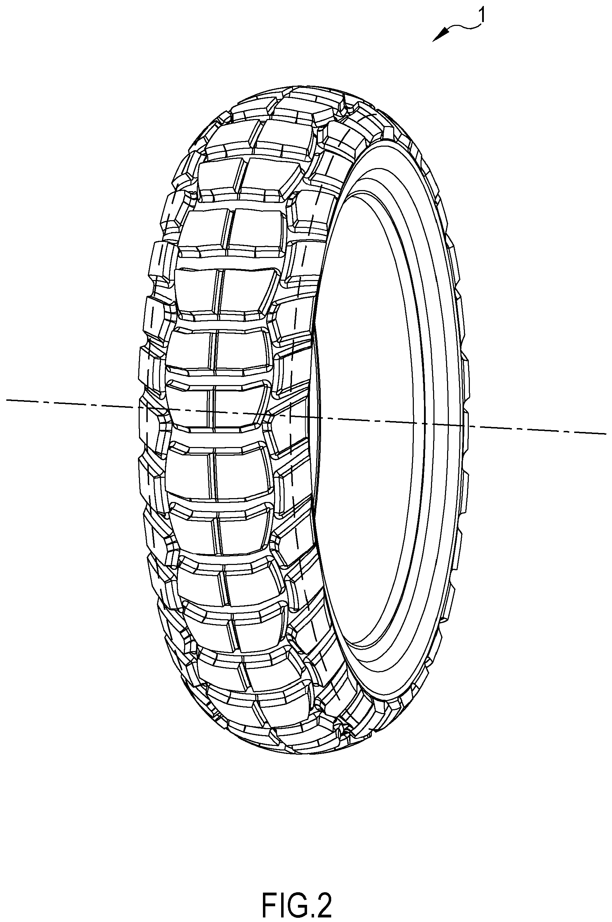

As shown in Figure 2, a tyre 1 according to the invention is of the type for "big enduro" motorcycles, with knobs, i.e. it comprises a plurality of transversal and circumferential grooves which delimit a plurality of mutually spaced blocks. Tyre 1 has a "camber ratio" defined by the ratio between the deflection and the maximum radial section width. Preferably, in the case of a big enduro rear tyre, the deflection of the tyre 1 is between about 40 mm and about 60 mm. The tyre 1 has a camber ratio of between about 0.25 and about 0.35, for example equal to about 0.26. In the case of front tyres, the deflection is between about 35 mm and about 60 mm and the camber ratio is between about 0.30 and about 0.40, for example equal to 0.38. The blocks and grooves define a tread pattern with a void/full ratio between 0.4 and 0.65, preferably between 0.5 and 0.6, for example equal to 0.51 in the case of rear tyres measuring 170/60/R17 and equal to 0.56 in the case of rear tyres measuring 150/70/R18.

The following examples are now provided for merely illustrative and non-limiting purposes.

### EXPERIMENTAL PART

In the present experimental part, the components of the compositions are expressed in phr (parts per hundreds of rubber). Unless otherwise indicated, all the percentages are expressed as percentages by weight.

### ANALYSIS METHODS

Double Bond % Content: the double bond content in the polymers, provided by the vendors, was determined by 1H-NMR.

Weight average molecular weight: the weight average molecular weight of the polymers, provided by the vendors, was measured according to known techniques, for example by GPC (Gel Permeation Chromatography) in accordance with the ISO 13885 method.

Glass transition temperature (Tg): The glass transition temperature Tg of the elastomeric polymers and of the vulcanised compounds, determined on the peak value of the Tan Delta, was measured by dynamo-mechanical analysis (DMA).

In detail, the samples were analysed with an EPLEXOR^{®} 150 (GABO) device by carrying out a temperature scan from -80 °C to + 30 °C with temperature increases of 2 °C/min, applying a dynamic tensile deformation of the 0.1% at a frequency of 1Hz. The specimens had the following dimensions: thickness 1 mm, width 10 mm, length 46 mm, reference length 29 mm (represents the free length that participates in the deformation while the two clamps block the ends of the specimen).

The tear strength was measured according to ASTM D624B.

The abrasion resistance has been evaluated according to the DIN53516 standard. The kinetic properties of the compounds (MDR) were evaluated using a rotorless rheometer according to ISO 6502-3 (2018) under the vulcanisation conditions of 10 minutes at 170 °C.

Mooney viscosity: ML (1 + 4) viscosity was measured at 100 °C, according to the ISO 289-1:2015 standard. For higher molecular weight polymers (E-SBR and S-SBR), the ML(3+4) viscosity was measured at 160 °C again according to the ISO 289-1:2015 standard.

The density was measured according to ISO 2781 (2018).

The static mechanical properties (CA1 load at 100% elongation, CA3 load at 300% elongation, CR tear strength, AR% elongation % at break) were measured at 23 °C on samples of elastomeric materials, vulcanised at 170 °C for 10 minutes according to the ISO 37:2017 standard.

The compressive dynamic mechanical properties E' and Tan delta were measured using an Instron model 1341 dynamic device in the tension-compression mode as described herein. A test piece of vulcanised material (170 °C for 10 minutes) having a cylindrical shape (length = 25 mm; diameter = 14 mm), preloaded in compression up to a longitudinal strain of 25% with respect to the initial length and maintained at the predetermined temperature of 10 °C, 23 °C or 70 °C for the whole duration of the test was subjected to a dynamic sinusoidal strain having an amplitude of ± 3.5% with respect to the length under pre-load, with a frequency of 100Hz. The dynamic mechanical properties are expressed in terms of dynamic elastic modulus (E') and Tan delta (loss factor). The Tan delta value was calculated as the ratio between the viscous dynamic modulus (E") and the dynamic elastic modulus (E').

The hardness in IRHD degrees (23 °C and 70 °C) was measured according to the ISO 48:2007 standard on samples of the elastomeric materials mentioned above, vulcanised at 170 °C for 10 minutes.

### PREPARATION OF THE ELASTOMERIC COMPOUNDS

The reference elastomeric compounds REF1 and REF2 and according to the invention INV1 and INV2 were prepared starting from the elastomeric compositions shown in the following Table 1:

**Table 1: Elastomeric compositions (phr)**

| Ingredient | Class | REF1 | REF2 | INV1 | INV2 |
|---|---|---|---|---|---|
| NEOCIS BR 60 | high cis BR | 40 | 30 | 30 | 30 |
| SBR 1723* | E-SBR | 16 (22*) | 16 (22*) | 16 (22*) | 16 (22*) |
| SBR 1739* | E-SBR | 44 (60.5*) | -- | -- | -- |
| TUFDENE E680* | S-SBR | -- | 54 (74.25*) | -- | -- |
| HPR 620 * | S-SBR | -- | -- | 54 (67.5*) | 54 (67.5*) |
| POLYVEST 130 | liquid polymer | -- | -- | -- | 10 |
| RICON 100 | liquid polymer | -- | -- | -- | 5 |
| VIVATEC 500 | plasticising oil | 15 | 11.25 | 18 | 8 |
| NOVARES TT30 | resin | 5 | 5 | 5 | -- |
| NOVARES TT90 | resin | 5 | 5 | 5 | 5 |
| ZINC OXIDE | activator | 4 | 4 | 4 | 4 |
| 6PPD | antioxidant | 2 | 2 | 2 | 2 |
| Zeosil 1165 | filler | 20 | 20 | 20 | 20 |
| N234 | filler | 60 | 60 | 60 | 60 |
| Tetrasulphide | vulcanising agent | 1.6 | 1.6 | 1.6 | 1.6 |
| TBBS | accelerant | 2 | 2 | 2 | 2 |
| SULPHUR | vulcanising agent | 2 | 2 | 2 | 2 |
| Total plasticising mixture | oil + liquid polymer + resin | 47.5 | 47.5 | 47.5 | 47.5 |

| | | | | | |
|---|---|---|---|---|---|
| wherein: *extended oil; in brackets total phr (polymer + oil*); NEOCIS BR 60 is EUROPRENE^{®} NEOCIS BR 60 from ENI, a solid polybutadiene prepared in solution, produced with a neodymium organometallic catalyst with a high cis content (min. 97%), weight average molecular weight around 550,000 g/mol; SBR 1723 TDAE from Sibur is a solid styrene butadiene copolymer (E-SBR) cold emulsion-polymerised using a mixture of rosin acid and fatty acid soaps as emulsifiers, Tg around -50 °C, Mooney viscosity around 48 MU, styrene content about 23%, oil extended with 37.5 parts of treated distilled aromatic extract oil (TDAE) per 100 phr of dry polymer; SBR 1739 is Buna^{®} SB 1739 - Schkopau from Synthos, a solid styrene butadiene copolymer (E-SBR) cold emulsion-polymerised using mixed rosin/fatty acid soaps, oil extended with 37.5 parts of an oil per 100 phr of dry polymer, Tg around -40 °C; TUFDENE E680 from Asahi Kasei a solution-polymerised solid styrene butadiene copolymer, functionalised on the chain end with functionalised terminating agents, extended with 37.5 parts of TDAE oil per every 100 phr of dry polymer, with a styrene content around 34%, vinyl around 58% (with respect to butadiene), Tg equal to around -25 °C (extended oil polymer) and Mw around 1470000 g/mol; HPR 620 from JSR is a commercial styrene-butadiene copolymer, chain functionalised with polyorganosiloxane multi-branch coupling agent, solution-polymerised as described in SG10201800553S(A), oil extended with 25 parts of a TDAE oil per 100 phr of dry polymer, having a weight average molecular weight around 1,000,000 g/mol, a styrene content around 40%, vinyl around 25%, Tg equal to around -33 °C and a Mooney viscosity around 80 MU [Mooney viscosity ML(3+4) at 160 °C]; POLYVEST 130 from Evonik is a stereospecific liquid polybutadiene (PB), with a high content of 1,4-cis double bonds (77% 1,4-cis double bonds, 22% 1,4-transl double bonds, 1% 1,2-vinyls double bonds), Tg -99 °C, weight average molecular weight 12,000 g/mol; RICON^{®} 100 from Cray Valley (Total) is a low molecular weight (Mn 4500) liquid (25% styrene) butadiene styrene copolymer (PBS), Tg -57 °C; VIVATEC 500 from Hansen & Rosenthal is a process oil (treated distilled aromatic extract TDAE); Tetrasulphide is bis[3-(triethoxysilyl)propyl]tetrasulphide JH-S69 from ChemSpec Ltd; NOVARES TT30 from Novares is a hydrocarbon resin produced by polymerisation of C9/C10 unsaturated aromatic hydrocarbons; Novares TT90 from Novares is ZINC OXIDE is RHENOGRAN ZNO from Zincol Ossidi; 6PPD is N-(1,3-dimethylbutyl)-N'-phenyl-p-phenylene-diamine SANTOFLEX 6PPD from Eastman; Zeosil 1165 from Rhodia is a highly dispersible amorphous precipitated silica; N234 is high surface area carbon black (STSA 112 m²/g); TBBS is N-tert-butyl-2-benzothiazyl sulphenamide from Huatai; SULPHUR is Rhenocure^{®} IS 90-20 from Lanxess, a mixture of insoluble/soluble sulphur in a 90:10 ratio plus 20% oil. REF1 is the reference elastomeric composition of the tread band of a "big enduro" motorcycle tyre, a composition comprising a mixture of diene tread polymers and a conventional plasticising mixture. REF2 is an elastomeric composition for tread band prepared to improve wet performance by modifying the reference composition REF1 in accordance with industry knowledge, i.e. by replacing the emulsion-polymerised solid styrene-butadiene copolymer (E-SBR) (SBR1739) and part of the polybutadiene (BR) with a solution-polymerised solid styrene butadiene copolymer (S-SBR) functionalised on the high molecular weight chain terminus such as TUFDENE E680. INV1 is an elastomeric composition according to the invention in which the other components being equal, the composition REF1 was modified by introducing 54 phr of a solution-polymerised solid styrene butadiene copolymer (S-SBR) chain-functionalised with multi-branch coupling agents (HPR 620) in place of 44 phr of emulsion-polymerised solid styrene-butadiene copolymer (E-SBR) (SBR1739) and 10 phr of high cis polybutadiene (BR) (NEOCIS BR 60). INV2 is an elastomeric composition according to the invention in which the other components being equal, the INV1 composition was modified by introducing liquid polymers (POLYVEST 130 and RICON 100) in place of the resin (NOVARES TT30) and, partially, of process oil (VIVATEC 500). | | | | | |

The elastomeric compositions of Table 1 maintained substantially the same total plasticiser content.

The reference elastomeric compounds and according to the invention were prepared from the above compositions according to the following process.

The mixing of the components was carried out in two steps using an internal mixer (Banbury, Intermix or Brabender).

In the first step (1) all the ingredients were introduced with the exception of the vulcanising agent and the accelerant. The mixing was continued for a maximum time of 5 minutes, reaching a temperature of approximately 145 °C. Subsequently, in the second test (2), again carried out using an internal mixer, the vulcanising agent and the accelerant were added, and the mixing was continued for 4 minutes while maintaining the temperature below 100 °C. The compounds were then unloaded. After cooling and after at least 12 hours from preparation, some samples of the compounds were vulcanised in a press at 170 °C for 10 min to give the specimens useful for mechanical characterisations.

### PROPERTIES OF THE ELASTOMERIC COMPOUNDS

The main static and dynamic properties of the compounds prepared from the above compositions, measured with the methods described above, are shown in the following Table 2:

**Table 2**

| Property | Unit of measurement | REF1 | REF2 | INV1 | INV2 |
|---|---|---|---|---|---|
| Mooney ML(1+4) viscosity | Mooney Unit MU | 50.40 | 59.80 | 68.60 | 62.70 |
| Density | g/cm³ | 1.156 | 1.155 | 1.157 | 1.153 |

| Tensile tests (ring) | | | | | |
|---|---|---|---|---|---|
| Ca1 | MPa | 1.89 | 1.82 | 2.29 | 1.96 |
| Ca3 | MPa | 8.35 | 8.53 | 10.03 | 8.85 |
| CR | MPa | 17.36 | 18.06 | 17.38 | 19.44 |
| AR% | % | 580.04 | 591.59 | 516.69 | 613.97 |
| IRHD hardness 23 °C | IRHD degrees | 67.20 | 64.90 | 66.50 | 64.50 |
| IRHD hardness 70°C | IRHD degrees | 57.70 | 57.00 | 59.20 | 57.80 |
| Tear resistance 23 °C | N/mm | 44.95 | 42.40 | 48.90 | 46.40 |
| Abrasion resistance | Loss in mm³ | 56.65 | 82.90 | 64.50 | 63.40 |

| MDR | | | | | |
|---|---|---|---|---|---|
| ML | dN m | 2.00 | 2.30 | 2.87 | 2.73 |
| MH | dN m | 13.18 | 12.93 | 14.09 | 13.10 |
| T30 | min | 3.05 | 3.24 | 3.20 | 3.46 |
| T90 | min | 6.31 | 7.09 | 6.39 | 6.95 |

| Dynamic properties | | | | | |
|---|---|---|---|---|---|
| E' (10°C; 100 Hz) | MPa | 11.07 | 10.03 | 10.25 | 10.81 |
| Tan delta | | 0.441 | 0.528 | 0.475 | 0.499 |
| E' (23 °C; 100 Hz) | MPa | 9.07 | 7.98 | 8.37 | 8.68 |
| Tan delta | | 0.370 | 0.420 | 0.382 | 0.407 |
| Grip index (23 °C) | | 24.5 | 19.0 | 21.9 | 21.3 |
| E' (70°C; 100 Hz) | MPa | 5.71 | 5.01 | 5.48 | 5.24 |
| Tan delta | | 0.234 | 0.227 | 0.216 | 0.244 |

As can be seen from the data relating to the tensile tests, the INV1 compound showed a significant increase in the Ca3 value (10.03 MPa), particularly predictive of a high mileage, compared to the REF1 and REF2 compounds (8.35 and 8.53 MPa) attributable to the introduction into the composition of the solution-polymerised solid styrene butadiene copolymer (S-SBR) functionalised with multi-branch coupling agents (HPR 620). The value of the Ca3 load returned comparable to the reference ones (8.85 MPa) when liquid polymers were introduced into the composition instead of the process oil and the resin, as in the case of the INV2 compound. The static mechanical properties (CA3, CR, AR%) of the latter, in which there was the combined use of the solution-polymerised solid styrene butadiene copolymer (S-SBR) functionalised with multi-branch coupling agents and liquid polymers, were even better and predictive of high endurance and mileage.

The IRHD hardness values at 23 °C of the compounds according to the invention INV1 and INV2 were lower than the reference compounds, predictive of good performance on wet surfaces.

The resistance to tearing and abrasion, specific prerogatives attributable to high cis polybutadiene and to the emulsion-polymerised solid styrene-butadiene copolymers (E-SBR) (REF1) were surprisingly not compromised either by the use of solution-polymerised solid styrene butadiene copolymers (S-SBR) functionalised with high molecular weight multi-branch coupling agents (INV1), nor by further replacement of the process oil and resin with liquid polymers (INV2), as opposed to by replacing part of the polybutadiene (BR) and emulsion-polymerised solid styrene-butadiene copolymer (E-SBR) with a traditional solution-polymerised solid styrene-butadiene copolymer (S-SBR) (Tufdene E680, REF2).

These results were highlighted by the respective values of tearing and abrasion, which for both INV1 and INV2 were in line with those of REF1, and in both cases higher than those of REF2, especially in terms of abrasion.

Furthermore, considering that the lower the ratio between E' and Tan delta (grip index) at 23 °C the better the wet grip, an unexpected improvement in grip compared to REF1 was highlighted for the materials of the invention, obtained both with the introduction of a solution-polymerised solid styrene butadiene copolymer (S-SBR) functionalised with multi-branch coupling agents instead of part of the polybutadiene (BR) and of the emulsion-polymerised solid styrene-butadiene copolymer (E- SBR) (INV1), and with the further replacement of process oil and resin with liquid polymers (INV2).

The latter material showed a marked improvement in wet grip, predicted by the lower grip index value at 23 °C, compared to REF1, while maintaining aligned abrasion and tearing properties.

By introducing a solution-polymerised solid styrene butadiene copolymer (S-SBR) functionalised with high molecular weight Mw multi-branch coupling agents into the INV1 and INV2 compounds, the expert would have expected an increase in the stiffness of the material and therefore a worsening of wet performance.

Surprisingly, however, both the INV1 compound and even more so the INV2 compound showed E', tan delta and grip index values predictive of excellent behaviour in the wet.

From the measurement of the rheological properties (MDR 170 °C, 10 minutes), a substantial maintenance of the vulcanization kinetics was observed between the reference compounds REF1, REF2 and those of the invention INV1, INV2.

In conclusion, the compounds according to the invention INV1 and INV2 showed an optimal combination of hardness, resistance to tearing and abrasion, modulus E' and hysteresis, predictive of a long mileage of the tyre together with improved wet performance.

On the other hand, this result was not achieved by simply using a traditional solution-polymerised solid styrene butadiene copolymer (S-SBR) as shown by the reference compound REF2 which, despite having good wet performance, significantly lost in mileage and tear resistance.

## Claims

1. An elastomeric composition for a vehicle wheel tyre comprising
0 to 30 phr of at least one liquid polymer,
0 to 20 phr of at least one resin,
10 to 60 phr of at least one plasticising oil,
wherein the sum of the liquid polymer, the resin, if present, and the plasticising oil is 20 to 90 phr,
100 phr of a mixture of solid diene elastomeric polymers, wherein said polymers mixture comprises, preferably consists of:
10 to 50 phr of at least one solid polybutadiene (BR) having
a weight average molecular weight Mw between 300,000 g/mol and 600,000g/mol and
a cis double bond content of at least 95%,
10 to 70 phr of at least one emulsion-polymerised solid styrene butadiene copolymer (E-SBR) having
a Tg of -60 °C to -20 °C,
a Mooney viscosity at 160 °C comprised between 30 and 70 MU, and
an amount of styrene comprised between 15% and 50%, and
10 to 80 phr of at least one solution-polymerised solid styrene butadiene copolymer (S-SBR), chain-functionalised with multi-branch coupling agents, having:
a weight average molecular weight Mw greater than 500,000 g/mol, and/or an amount of styrene comprised between 25% and 50% and an amount of vinyl comprised between 10% and 50%, and/or
a Tg between -50 °C and -20 °C, and/or
a Mooney viscosity at 160 °C between 60 and 100 MU,
wherein the characteristics of the solid diene elastomeric polymers of said mixture are measured according to the methods indicated in the experimental part,
at least 40 phr of at least one reinforcing filler, and
at least 1 phr, preferably at least 2 phr, of at least one vulcanising agent.

2. The composition according to claim 1, wherein:
- the liquid polymer may be present in an amount between 0 and 28 phr, preferably between 0 and 23 phr;
- the resin may be present in an amount between 0 and 15 phr, preferably between 1 and 12 phr, more preferably between 3 and 10 phr;
- the plasticising oil is present in an amount between 20 and 50 phr, preferably between 25 and 45 phr; and
- the sum of the liquid polymer, the resin, if present, and the plasticising oil is 25 to 80 phr, preferably 30 to 60 phr.

3. The composition according to claim 1 or 2, wherein said mixture of solid diene elastomeric polymers comprises, preferably consists of:
15 to 50 phr of at least one solid polybutadiene (BR),
10 to 60 phr of at least one emulsion-polymerised solid styrene butadiene copolymer (E-SBR), and
15 to 75 phr of at least one solution-polymerised styrene-butadiene copolymer (S-SBR), chain-functionalised with multi-branch coupling agents.

4. The composition according to claim 3, wherein said mixture of solid diene elastomeric polymers comprises, preferably consists of:
25 to 40 phr of at least one solid polybutadiene (BR),
10 to 40 phr of at least one emulsion-polymerised solid styrene butadiene copolymer (E-SBR), and
30 to 65 phr of at least one solution-polymerised styrene-butadiene copolymer (S-SBR), chain-functionalised with multi-branch coupling agents.

5. The composition according to any one of claims 1 to 4, wherein:
the solid polybutadiene (BR) has a weight average molecular weight Mw of 350,000 to 550,000 g/mol and a cis double bond content of 95 to 99%, the emulsion-polymerised solid styrene butadiene copolymer (E-SBR) has a Tg from -60 °C to - 25 °C, a Mooney viscosity between 40 and 60 MU and a % styrene content between 20% and 45%, and
the solution-polymerised solid styrene butadiene copolymer (S-SBR), chain-functionalised with multi-branch coupling agents has a weight average molecular weight Mw greater than 800,000 g/mol, preferably than 900,000 g/mol, an amount of styrene between 30% and 45% and an amount of vinyl between 15% and 40%, a Tg between -45 °C to -25 °C and/or a Mooney viscosity, measured at 160 °C, of between 70 and 90 MU.

6. The composition according to any one of claims 1 to 5, wherein said mixture of solid diene elastomeric polymers comprises, preferably consists of
- 25 to 35 phr of at least one solid polybutadiene (BR) having a weight average molecular weight Mw between 370,000 and 550,000 g/mol and a cis double bond content of at least 97%,
- 10 to 45 phr of at least one emulsion-polymerised solid styrene butadiene copolymer (E-SBR) having a Tg from -58 °C to -28 °C, a Mooney viscosity between 45 and 55 MU and a % styrene content between 22% and 42%,
- 30 to 65 phr of at least one solution-polymerised solid styrene butadiene copolymer (S-SBR), chain-functionalised with multi-branch coupling agents having a weight average molecular weight Mw greater than 800,000 g/mol, preferably than 900,000 g/mol, an amount of styrene between 30% and 45% and an amount of vinyl between 15% and 40%, a Tg between -45 °C to -25 °C and a Mooney viscosity, measured at 160 °C, of between 70 and 90 MU.

7. The composition according to any one of claims 1 to 6, comprising at least 50 phr, at least 60 phr, at least 70 phr or at least 80 phr of at least one reinforcing filler.

8. The composition according to any one of claims 1 to 7, wherein said multi-branch coupling agent of the at least one chain-functionalised solution-polymerised solid styrene butadiene copolymer (S-SBR) is a polyorganosiloxane.

9. An elastomeric compound for tread band of a tyre obtained by mixing and vulcanization of the elastomeric composition according to any one of any of claims 1 to 8.

10. The elastomeric compound according to claim 9, having one or more of the following features:
- a Mooney viscosity higher than 50 MU, preferably higher than 60 MU;
- a density between 1.100 and 1.500 g/cm³;
- a load at 300% elongation (Ca3) higher than 8.50 MPa, preferably higher than 8.60 MPa;
- a breaking load higher than 17 MPa, preferably 19 MPa;
- an elongation at break higher than 500%, preferably higher than 600%;
- an IRHD hardness at 23 °C between 60 and 70, preferably between 62 and 68 degrees IRHD;
- a tear strength at 23 °C higher than 45.00 N/mm, preferably higher than 46.00 N/mm;
- a resistance to abrasion with a loss of material of less than 75.00 mm³, preferably less than 70.00 mm³, more preferably less than 65.00 mm³;
- a dynamic elastic modulus E' at 23 °C less than 10.00 MPa, preferably less than 9.00 MPa;
- a loss factor (Tan delta) at 23 °C calculated as the ratio between the viscous dynamic modulus (E") and the dynamic elastic modulus (E') not less than 0.370, preferably not less than 0.380, more preferably not less than 0.400, measured according to the methods indicated in the experimental part.

11. A tread band for tyre for vehicle wheels comprising, preferably consisting of, the elastomeric compound according to claim 9 or 10.

12. A tyre for vehicle wheels comprising the tread band according to claim 11.

13. The tyre according to claim 12 for motorcycle wheels.

## Patentansprüche

1. Elastomerzusammensetzung für einen Fahrzeugradreifen, umfassend
0 bis 30 phr mindestens eines flüssigen Polymers,
0 bis 20 phr mindestens eines Harzes,
10 bis 60 phr mindestens eines Weichmacheröls,
wobei die Summe des flüssigen Polymers, des Harzes, falls vorhanden, und des Weichmacheröls 20 bis 90 phr beträgt,
100 phr einer Mischung aus festen Dien-Elastomerpolymeren, wobei die Polymermischung umfasst, vorzugsweise besteht aus:
10 bis 50 phr mindestens eines festen Polybutadiens (BR), das aufweist
ein gewichtsmittleres Molekulargewicht Mw zwischen 300.000 g/mol und 600.000 g/mol und
einen Gehalt an cis-Doppelbindungen von mindestens 95 %,
10 bis 70 phr mindestens eines emulsionspolymerisierten festen Styrol-Butadien-Copolymers (E-SBR), das aufweist
eine Tg von -60 °C bis -20 °C,
eine Mooney-Viskosität bei 160 °C, die zwischen 30 und 70 MU liegt, und
eine Menge an Styrol, die zwischen 15 % und 50 % liegt, und
10 bis 80 phr mindestens eines lösungspolymerisierten festen Styrol-Butadien-Copolymers (S-SBR), kettenfunktionalisiert mit mehrzweigigen Haftvermittlern, das aufweist:
ein gewichtsmittleres Molekulargewicht Mw von mehr als 500.000 g/mol und/oder
eine Menge an Styrol, die zwischen 25 % und 50 % liegt, und eine Menge an Vinyl, die in zwischen 10 % und 50 % liegt, und/oder
eine Tg zwischen -50 °C und -20 °C und/oder
eine Mooney-Viskosität bei 160 °C zwischen 60 und 100 MU,
wobei die Eigenschaften der festen Dien-Elastomerpolymere der Mischung gemäß den in dem experimentellen Teil angegebenen Verfahren gemessen sind, mindestens 40 phr mindestens eines verstärkenden Füllstoffs, und
mindestens 1 phr, vorzugsweise mindestens 2 phr, mindestens eines Vulkanisationsmittels.

2. Zusammensetzung nach Anspruch 1, wobei
- das flüssige Polymer in einer Menge zwischen 0 und 28 phr, vorzugsweise zwischen 0 und 23 phr, vorhanden sein kann;
- das Harz in einer Menge zwischen 0 und 15 phr, vorzugsweise zwischen 1 und 12 phr, mehr bevorzugt zwischen 3 und 10 phr, vorhanden sein kann;
- das Weichmacheröl in einer Menge zwischen 20 und 50 phr, vorzugsweise zwischen 25 und 45 phr vorhanden ist; und
- die Summe des flüssigen Polymers, des Harzes, falls vorhanden, und des Weichmacheröls 25 bis 80 phr, vorzugsweise 30 bis 60 phr beträgt.

3. Zusammensetzung nach Anspruch 1 oder 2, wobei die Mischung aus festen Dien-Elastomerpolymeren umfasst, vorzugsweise besteht aus:
15 bis 50 phr mindestens eines festen Polybutadiens (BR),
10 bis 60 phr mindestens eines emulsionspolymerisierten festen Styrol-Butadien-Copolymers (E-SBR) und
15 bis 75 phr mindestens eines lösungspolymerisierten Styrol-Butadien-Copolymers (S-SBR), kettenfunktionalisiert mit mehrzweigigen Haftvermittlern.

4. Zusammensetzung nach Anspruch 3, wobei die Mischung aus festen Dien-Elastomerpolymeren umfasst, vorzugsweise besteht aus:
25 bis 40 phr mindestens eines festen Polybutadiens (BR),
10 bis 40 phr mindestens eines emulsionspolymerisierten festen Styrol-Butadien-Copolymers (E-SBR) und
30 bis 65 phr mindestens eines lösungspolymerisierten Styrol-Butadien-Copolymers (S-SBR), kettenfunktionalisiert mit mehrzweigigen Haftvermittlern.

5. Zusammensetzung nach einem der Ansprüche 1 oder 4, wobei:
das feste Polybutadien (BR) ein gewichtsmittleres Molekulargewicht Mw von 350.000 bis 550.000 g/mol und einen Gehalt an cis-Doppelbindungen von 95 bis 99 % aufweist, das emulsionspolymerisierte feste Styrol-Butadien-Copolymer (E-SBR) eine Tg von -60 °C bis -25 °C, eine Mooney-Viskosität zwischen 40 und 60 MU und einen prozentualen Styrolgehalt zwischen 20 % und 45 % aufweist und
das lösungspolymerisierte feste Styrol-Butadien-Copolymer (S-SBR), kettenfunktionalisiert mit mehrzweigigen Haftvermittlern, ein gewichtsmittleres Molekulargewicht Mw von mehr als 800.000 g/mol, vorzugsweise mehr als 900.000 g/mol, einen Styrolgehalt zwischen 30 % und 45 % und einen Vinylgehalt zwischen 15 % und 40 %, eine Tg zwischen -45 °C und -25 °C und/oder eine bei 160 °C gemessene Mooney-Viskosität zwischen 70 und 90 MU aufweist.

6. Zusammensetzung nach einem der Ansprüche 1 bis 5, wobei die Mischung aus festen Dien-Elastomerpolymeren umfasst, vorzugsweise besteht aus:
- 25 bis 35 phr mindestens eines festen Polybutadiens (BR), das ein gewichtsmittleres Molekulargewicht Mw zwischen 370.000 und 550.000 g/mol und ein Gehalt an cis-Doppelbindungen von mindestens 97 % aufweist,
- 10 bis 45 phr mindestens eines emulsionspolymerisierten festen Styrol-Butadien-Copolymers (E-SBR), das eine Tg von -58 °C bis -28 °C, eine Mooney-Viskosität zwischen 45 und 55 MU und einen prozentualen Styrolgehalt zwischen 22 % und 42 % aufweist,
- 30 bis 65 phr mindestens eines lösungspolymerisierten festen Styrol-Butadien-Copolymers (S-SBR), kettenfunktionalisiert mit mehrzweigigen Haftvermittlern, das ein gewichtsmittleres Molekulargewicht Mw von mehr als 800.000 g/mol, vorzugsweise mehr als 900.000 g/mol, einen Styrolgehalt zwischen 30 % und 45 % und einen Vinylgehalt zwischen 15 % und 40 %, eine Tg zwischen -45 °C und -25 °C und eine bei 160 °C gemessene Mooney-Viskosität zwischen 70 und 90 MU aufweist.

7. Zusammensetzung nach einem der Ansprüche 1 bis 6, umfassend mindestens 50 phr, mindestens 60 phr, mindestens 70 phr oder mindestens 80 phr mindestens eines verstärkenden Füllstoffs.

8. Zusammensetzung nach einem der Ansprüche 1 bis 7, wobei der mehrzweigige Haftvermittler des mindestens einen kettenfunktionalisierten, lösungspolymerisierten festen Styrol-Butadien-Copolymers (S-SBR) ein Polyorganosiloxan ist.

9. Elastomerverbindung für ein Laufflächenband eines Reifens, erhalten durch Mischen und Vulkanisation der Elastomerzusammensetzung nach einem der Ansprüche 1 bis 8.

10. Elastomerverbindung nach Anspruch 9, die eines oder mehrere der folgenden Merkmale aufweist:
- eine Mooney-Viskosität von mehr als 50 MU, vorzugsweise mehr als 60 MU;
- eine Dichte zwischen 1,100 und 1,500 g/cm³;
- eine Last bei 300 % Dehnung (Ca3), die höher als 8,50 MPa, vorzugsweise höher als 8,60 MPa, ist;
- eine Bruchlast, die höher als 17 MPa, vorzugsweise 19 MPa, ist;
- eine Bruchdehnung von mehr als 500 %, vorzugsweise mehr als 600 %;
- eine IRHD-Härte bei 23 °C zwischen 60 und 70, vorzugsweise zwischen 62 und 68 Grad IRHD;
- eine Reißfestigkeit bei 23 °C, die höher als 45,00 N/mm, vorzugsweise höher als 46,00 N/mm, ist;
- eine Abriebfestigkeit mit einem Materialverlust von weniger als 75,00 mm³, vorzugsweise
weniger als 70,00 mm³, mehr bevorzugt weniger als 65,00 mm³;
- einen dynamischen Elastizitätsmodul E' bei 23 °C von weniger als 10,00 MPa, vorzugsweise weniger als 9,00 MPa;
- einen Verlustfaktor (Tangens delta) bei 23 °C, berechnet als das Verhältnis zwischen dem dynamischen Verlustmodul (E") und dem dynamischen Elastizitätsmodul (E'), von nicht weniger als 0,370, vorzugsweise nicht weniger als 0,380, mehr bevorzugt nicht weniger als 0,400, gemessen gemäß den in dem experimentellen Teil angegebenen Verfahren.

11. Laufflächenband für Reifen für Fahrzeugräder, das die Elastomerverbindung nach Anspruch 9 oder 10 umfasst, vorzugsweise aus dieser besteht.

12. Reifen für Fahrzeugräder, umfassend das Laufflächenband nach Anspruch 11.

13. Reifen nach Anspruch 12 für Motorradräder.

## Revendications

1. Composition élastomère pour un pneumatique de roue de véhicule comprenant
0 à 30 phr d'au moins un polymère liquide,
0 à 20 phr d'au moins une résine,
10 à 60 phr d'au moins une huile plastifiante,
dans laquelle la somme du polymère liquide, de la résine, si elle est présente, et de l'huile plastifiante est de 20 à 90 phr,
100 phr d'un mélange de polymères élastomères diéniques solides, dans laquelle ledit mélange de polymères comprend, de préférence est constitué de :
10 à 50 phr d'au moins un polybutadiène (BR) solide ayant
une masse moléculaire moyenne en poids, Mw, comprise entre 300 000 g/mol et 600 000 g/mol, et
une teneur en double liaison cis d'au moins 95 %,
10 à 70 phr d'au moins un copolymère solide de styrène butadiène polymérisé en émulsion (E-SBR) ayant
une Tg comprise entre -60 °C et -20 °C,
une consistance Mooney à 160 °C comprise entre 30 et 70 MU, et
une quantité de styrène comprise entre 15 % et 50 %, et
10 à 80 phr d'au moins copolymère solide de styrène butadiène polymérisé en solution (S-SBR), fonctionnalisé en chaîne avec des agents de couplage à ramifications multiples, ayant :
une masse moléculaire moyenne en poids Mw supérieure à 500 000 g/mol, et/ou
une quantité de styrène comprise entre 25 % et 50 % et une quantité de vinyle comprise entre 10 % et 50 %, et/ou
une Tg entre -50 °C et -20 °C, et/ou
une consistance Mooney à 160 °C entre 60 et 100 MU,
dans laquelle les caractéristiques des polymères élastomères diéniques solides dudit mélange sont mesurées selon les procédés indiqués dans la partie expérimentale, au moins 40 phr d'au moins une charge renforçante, et
au moins 1 phr, de préférence au moins 2 phr, d'au moins un agent de vulcanisation.

2. Composition selon la revendication 1, dans laquelle :
- le polymère liquide peut être présent en une quantité comprise entre 0 et 28 phr, de préférence entre 0 et 23 phr ;
- la résine peut être présente en une quantité comprise entre 0 et 15 phr, de préférence entre 1 et 12 phr, plus préférablement entre 3 et 10 phr ;
- l'huile plastifiante est présente en une quantité comprise entre 20 et 50 phr, de préférence entre 25 et 45 phr ; et
- la somme du polymère liquide, de la résine, si elle est présente, et de l'huile plastifiante est de 25 à 80 phr, de préférence de 30 à 60 phr.

3. Composition selon la revendication 1 ou 2, dans laquelle ledit mélange de polymères élastomères diéniques solides comprend, de préférence, est constitué de :
15 à 50 phr d'au moins un polybutadiène (BR) solide,
10 à 60 phr d'au moins un copolymère solide de styrène butadiène polymérisé en émulsion (E-SBR), et
15 à 75 phr d'au moins un copolymère styrène-butadiène polymérisé en solution (S-SBR), fonctionnalisé en chaîne avec des agents de couplage à ramifications multiples.

4. Composition selon la revendication 3, dans laquelle ledit mélange de polymères élastomères diéniques solides comprend, de préférence est constitué de :
25 à 40 phr d'au moins un polybutadiène (BR) solide,
10 à 40 phr d'au moins un copolymère solide de styrène butadiène polymérisé en émulsion (E-SBR), et
30 à 65 phr d'au moins un copolymère styrène-butadiène polymérisé en solution (S-SBR), fonctionnalisé en chaîne avec des agents de couplage à ramifications multiples.

5. Composition selon l'une quelconque des revendications 1 à 4, dans laquelle :
le polybutadiène (BR) solide a une masse moléculaire moyenne en poids Mw de 350 000 à 550 000 g/mol et une teneur en double liaison cis de 95 à 99 %, le copolymère solide de styrène butadiène polymérisé en émulsion (E-SBR) a une Tg allant de -60 °C à -25 °C, soit une constance Mooney entre 40 et 60 MU et une teneur en % de styrène entre 20 % et 45 %, et
le copolymère solide de styrène butadiène polymérisé en solution (S-SBR), fonctionnalisé en chaîne avec des agents de couplage à ramifications multiples, a une masse moléculaire moyenne en poids Mw supérieure à 800 000 g/mol, de préférence supérieure à 900 000 g/mol, une quantité de styrène comprise entre 30 % et 45 % et une quantité de vinyle entre 15 % et 40 %, une Tg comprise entre -45 °C et -25 °C et/ou une consistance Mooney, mesurée à 160 °C, comprise entre 70 et 90 MU.

6. Composition selon l'une quelconque des revendications 1 à 5, dans laquelle ledit mélange de polymères élastomères diéniques solides comprend, de préférence est constitué de
- 25 à 35 phr d'au moins un polybutadiène (BR) solide ayant une masse moléculaire moyenne en poids Mw entre 370 000 et 550 000 g/mol et une teneur en double liaison cis d'au moins 97 %,
- 10 à 45 phr d'au moins un copolymère solide de styrène butadiène polymérisé en émulsion (E-SBR) ayant une Tg allant de -58 °C à -28 °C, une consistance Mooney comprise entre 45 et 55 MU et un % de teneur en styrène entre 22 % et 42 %,
- 30 à 65 phr d'au moins un copolymère solide de styrène butadiène polymérisé en solution (S-SBR), fonctionnalisé en chaîne avec des agents de couplage à ramifications multiples ayant une masse moléculaire moyenne en poids Mw supérieure à 800 000 g/mol, de préférence supérieure à 900 000 g/mol, une quantité de styrène comprise entre 30 % et 45 % et une quantité de vinyle comprise entre 15 % et 40 %, une Tg comprise entre -45 °C et -25 °C et une consistance Mooney mesurée à 160 °C, comprise entre 70 et 90 MU.

7. Composition selon l'une quelconque des revendications 1 à 6, comprenant au moins 50 phr, au moins 60 phr, au moins 70 phr ou au moins 80 phr d'au moins une charge renforçante.

8. Composition selon l'une quelconque des revendications 1 à 7, dans laquelle ledit agent de couplage à ramifications multiples de l'au moins un copolymère solide de styrène butadiène polymérisé en solution fonctionnalisé par une chaîne (S-SBR) est un polyorganosiloxane.

9. Composé élastomère pour bande de roulement d'un pneumatique obtenu par mélange et vulcanisation de la composition élastomère selon l'une quelconque des revendications 1 à 8.

10. Composé élastomère selon la revendication 9, ayant une ou plusieurs des caractéristiques suivantes :
- une consistance Mooney supérieure à 50 MU, de préférence supérieure à 60 MU ;
- une masse volumique comprise entre 1 100 et 1 500 g/cm³ ;
- une charge à 300 % d'allongement (Ca3) supérieure à 8,50 MPa, de préférence supérieure à 8,60 MPa ;
- une charge à la rupture supérieure à 17 MPa, de préférence 19 MPa ;
- un allongement à la rupture supérieur à 500 %, de préférence supérieur à 600 % ;
- une dureté IRHD à 23 °C entre 60 et 70, de préférence entre 62 et 68 degrés IRHD ;
- une résistance à la déchirure à 23 °C supérieure à 45,00 N/mm, de préférence supérieure à 46,00 N/mm ;
- une résistance à la déchirure avec une perte de matériau inférieure à 75,00 mm³, de préférence inférieure à 70,00 mm³, plus préférablement inférieure à 65,00 mm³ ;
- un module d'élasticité dynamique E' à 23 °C inférieur à 10,00 MPa, de préférence inférieur à 9,00 MPa ;
- un facteur de perte (Tan delta) à 23 °C, calculé comme le rapport entre la module dynamique visqueuse (E") et la module élastique dynamique (E') d'au moins 0,370, de préférence d'au moins 0,380, plus préférablement d'au moins 0,400, mesuré selon les procédés indiquée dans la partie expérimentale.

11. Bande de roulement pour pneumatique pour roues de véhicule comprenant, de préférence constituée du composé élastomère selon la revendication 9 ou 10.

12. Pneumatique pour roues de véhicule comprenant la bande de roulement selon la revendication 11.

13. Pneumatique selon la revendication 12 pour roues de motocyclette.
